# EUROPEAN PATENT APPLICATION

(11) **EP 4 761 330 A1**
(43) Date of publication of application: **17.06.2026**
(21) Application number: 23948696.2
(22) Date of filing: 11.08.2023
(51) Int. Cl.: H04W 24/04

(54) **MODEL FAILURE RECOVERY METHOD AND APPARATUS, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); TIAN, Wenqiang, Dongguan, Guangdong 523860 (CN)
(74) Representative: Taor, Simon Edward William
(86) International application number: PCT/CN2023/112511
(87) International publication number: WO 2025/035251

(57) **Abstract**

Provided in the embodiments of the present application are a model failure recovery method and apparatus, and a terminal device and a network device. The method comprises: a terminal device performing performance monitoring on a first AI model, and sending model failure reporting information to a network device on the basis of a monitoring result, wherein the model failure reporting information is used for indicating that a model failure occurs in the first AI model, or for indicating whether a model failure occurs in the first AI model; and the terminal device receiving model recovery information sent by the network device, and performing information transmission with the network device on the basis of the model recovery information.

## Description

### TECHNICAL FIELD

Embodiments of the present disclosure relate to the technical field of mobile communication, in particular to a model failure recovery method and apparatus, a terminal device and a network device.

### BACKGROUND

For wireless communication based on Artificial Intelligence (Al)/Machine Learning (ML), a terminal device can use an AI model deployed on a terminal device side to transmit information with a network device. However, as a communication environment of the terminal device changes, if the AI model on the terminal device side is not updated, a performance of the AI model may gradually deteriorate, resulting in poorer transmission performance of the terminal device, which may even be worse than a non-AI/ML manner. How to perform performance monitoring on the AI model and update the AI model in a timely manner is a problem that needs to be solved.

### SUMMARY

In embodiments of the present disclosure, there is provided a model failure recovery method and apparatus, a terminal device, a network device, a chip, a computer readable storage medium, a computer program product and a computer program.

In a first aspect, the embodiments of the present disclosure provide a model failure recovery method, which includes the following operations.

The terminal device performs performance monitoring on a first Artificial Intelligence (AI) model, and sends model failure reporting information to a network device according to a monitoring result. The model failure reporting information is used to indicate that a model failure has occurred in the first AI model or to indicate whether a model failure has occurred in the first AI model.

The terminal device receives model recovery information sent by the network device, and performs information transmission with the network device according to the model recovery information.

In a second aspect, the embodiments of the present disclosure provide a model failure recovery method, which includes the following operations.

The network device receives model failure reporting information sent by a terminal device. The model failure reporting information is used to indicate that a model failure has occurred in a first Artificial Intelligence (AI) model or to indicate whether a model failure has occurred in the first AI model.

The network device sends model recovery information to the terminal device. The model recovery information is used by the terminal device for performing information transmission with the network device.

In a third aspect, the embodiments of the present disclosure provide a model failure recovery apparatus, which is applied to a terminal device. The model failure recovery apparatus includes a monitoring unit, a sending unit and a receiving unit.

The monitoring unit is configured to perform monitor performance monitoring on a first Artificial Intelligence (AI) model.

The sending unit is configured to send model failure reporting information to a network device according to a monitoring result. The model failure reporting information is used to indicate that a model failure has occurred in the first AI model or to indicate whether a model failure has occurred in the first AI model.

The receiving unit is configured to receive model recovery information sent by the network device.

The sending unit is further configured to perform information transmission with the network device according to the model recovery information.

In a fourth aspect, the embodiments of the present disclosure provide a model failure recovery apparatus, which is applied to a network device. The model failure recovery apparatus includes a receiving unit and a sending unit.

The receiving unit is configured to receive model failure reporting information sent by a terminal device. The model failure reporting information is used to indicate that a model failure has occurred in a first Artificial Intelligence (AI) model or to indicate whether a model failure has occurred in the first AI model.

The sending unit is configured to send model recovery information to the terminal device. The model recovery information is used by the terminal device for performing information transmission with the network device.

In a fifth aspect, the embodiments of the present disclosure provide a terminal device, including a processor and a memory. The memory is configured to store a computer program, and the processor is configured to call and execute the computer program stored in the memory to implement the above model failure recovery method.

In a sixth aspect, the embodiments of the present disclosure provide a network device, including a processor and a memory. The memory is configured to store a computer program, and the processor is configured to call and execute the computer program stored in the memory to implement the above model failure recovery method.

In a seventh aspect, the embodiments of the present disclosure provide a chip, which includes a processor, configured to call and execute a computer program in a memory to cause a device equipped with the chip to implement the above model failure recovery method.

In an eighth aspect, the embodiments of the present disclosure provide a computer-readable storage medium, where the computer-readable storage medium has stored thereon a computer program, and the computer program is executed by at least one processor to implement the above model failure recovery method.

In a ninth aspect, the embodiments of the present disclosure provide a computer program product, which includes computer program instructions, that cause a computer to implement the above model failure recovery method.

In a tenth aspect, the embodiments of the present disclosure provide a computer program that, when running on a computer, causes a computer to implement the above model failure recovery method.

According to the technical solution of the embodiments of the present disclosure, a model failure recovery method is proposed, in which a terminal device performs performance monitoring on a first AI model, and sends model failure reporting information to a network device according to a monitoring result, and the model failure reporting information indicates that a model failure has occurred in the first AI model or whether the model failure has occurred in the first AI model. After receiving the model failure report information, the network device sends model recovery information to the terminal device, so that the terminal device can update the first AI model in real time based on the model recovery information, and then communicate with the network device based on the updated AI model, avoiding the loss of transmission performance caused by the deterioration of AI model performance.

### BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure, but do not constitute improper limitation to the present disclosure. In the accompanying drawings:
FIG. 1 is a schematic diagram of an application scenario according to an embodiment of the present disclosure.
FIG. 2 is a schematic diagram of an example of a neuron structure.
FIG. 3 is a schematic diagram of an example of a neural network.
FIG. 4 is a schematic diagram of a neural network for CSI feedback.
FIG. 5 is a first schematic flowchart of a model failure recovery method provided by an embodiment of the present disclosure.
FIG. 6 is a second schematic flowchart of a model failure recovery method provided by an embodiment of the present disclosure.
FIG. 7 is a third schematic flowchart of a model failure recovery method provided by an embodiment of the present disclosure.
FIG. 8 is a fourth schematic flowchart of a model failure recovery method provided by an embodiment of the present disclosure.
FIG. 9 is a fifth schematic flowchart of a model failure recovery method provided by an embodiment of the present disclosure.
FIG. 10 is a first schematic diagram of a structural composition of a model failure recovery apparatus provided by the embodiment of the present disclosure.
FIG. 11 is a second schematic diagram of a structural composition of a model failure recovery apparatus provided by the embodiment of the present disclosure.
FIG. 12 is a schematic structural diagram of a communication device provided by an embodiment of the present disclosure.
FIG. 13 is a schematic structural diagram of a chip according to an embodiment of the present disclosure.
FIG. 14 is a schematic block diagram of a communication system provided by an embodiment of the present disclosure.

### DETAILED DESCRIPTION

The technical solution of the embodiments of the present disclosure will be described below in conjunction with the drawings in the embodiments of the present disclosure, and it will be apparent that the described embodiments are part of the embodiments of the present disclosure, but not all of them. Based on the embodiments in the present disclosure, all other embodiments obtained by those of ordinary skill in the art without creative work fall within the scope of protection of the present disclosure.

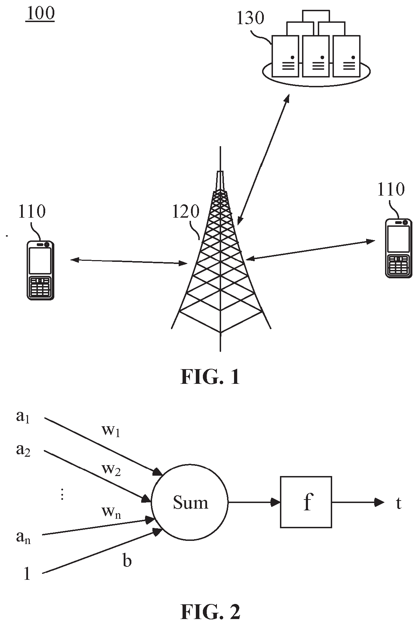

FIG. 1 is a schematic diagram of an application scenario according to an embodiment of the present disclosure.

As illustrated in FIG. 1, a communication system 100 may include terminal devices 110 and a network device 120. The network device 120 may communicate with the terminal devices 110 through an air interface. Multi-service transmission is supported between the terminal devices 110 and the network device 120.

It is to be understood that the embodiments of the present disclosure are illustrative only with the communication system 100 but are not limited thereto. That is, the technical solution of the embodiments of the present disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a New Radio (NR) communication system), or a future communication system, etc.

In the communication system 100 illustrated in FIG. 1, the network device 120 may be an access network device that communicates with the terminal device 110. The access network device may provide communication coverage for a particular geographic area and may communicate with the terminal devices 110 (e.g. User Equipment (UE)) located within the coverage area.

The network device 120 may be an Evolutional Node B (eNB or eNodeB) in a Long Term Evolution (LTE) system, or a gNB in a Next Generation Radio Access Network (NG RAN) device or an NR system, or a wireless controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN), etc.

The terminal device 110 may be any terminal device including but not limited to a terminal device in wired or wireless connection with the network device 120 or other terminal devices.

For example, the terminal device 110 may refer to an access terminal, User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a Session Initiation Protocol (SIP) telephone, an IoT device, a satellite handheld terminal, a Wireless Local Loop (WLL) station, a Personal Digital Assistant (PDA), a handheld device with wireless communication function, a computing device or other processing device connected to a wireless modem, an in-vehicle device, a wearable device, a terminal device in the 5G network or a terminal device in the future evolved network, etc.

The terminal device 110 may be used for Device to Device (D2D) communication.

The wireless communication system 100 may also include a core network device 130 that communicates with the base station. The core network device 130 may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device 130 may also be an Evolved Packet Core (EPC) device of the LTE network, for example, a Session Management Function + Core Packet Gateway (SMF+PGW-C) device. It is to be understood that SMF + PGW-C can achieve the same functions as SMF and PGW-C simultaneously. In the process of network evolution, the core network device may also be called by other names, or a new network entity may be formed by dividing the functions of the core network, which is not limited by the embodiments of the present disclosure.

Various functional units in the communication system 100 may also establish connections therebetween through a next generation (NG) interface to realize communication.

For example, the terminal device establishes an air interface connection with the access network device through an NR interface for transmitting user plane data and control plane signaling. The terminal device may establish control plane signaling connection with an AMF through NG interface 1 (abbreviated as N1). The access network device such as a next generation radio access base station (gNB) may establish a user plane data connection with a UPF through NG interface 3 (abbreviated as N3). The access network device may establish control plane signaling connection with the AMF through NG interface 2 (abbreviated as N2). The UPF may establish control plane signaling connection with an SMF through NG interface 4 (abbreviated as N4). UPF may interact user plane data with a data network through NG interface 6 (abbreviated as N6). The AMF may establish control plane signaling connection with the SMF through NG interface 11 (abbreviated as N11). The SMF may establish control plane signaling connection with a PCF through NG interface 7 (abbreviated as N7).

FIG. 1 exemplarily illustrates a base station, a core network device and two terminal devices. Optionally, the wireless communication system 100 may include multiple base stations, and other numbers of terminal devices may be included within the coverage of each base station, which is not limited by embodiments of the present disclosure.

It is to be noted that FIG. 1 is only illustrative of the system to which the present disclosure is applied, and of course, the method illustrated in the embodiments of the present disclosure can also be applied to other systems. In addition, the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. It is to be understood that the reference to "indicate" in embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B. It is to be understood that "correspond" in the description of embodiments of the present disclosure may mean that there is a direct correspondence or an indirect correspondence relationship between the two, may also mean that there is an association relationship between the two, may also be a relationship between indication and being indicated, configuration and being configured, etc. It should also be understood that the "predefined" or "predefined rules" referred to in embodiments of the present disclosure may be implemented by pre-storing corresponding codes, tables, or other manners that may be used to indicate relevant information in devices (e.g., including terminal devices and network devices), the specific implementation of which is not limited by the present disclosure. For example, predefined may refer to what is defined in the protocol. It should also be understood that, in embodiments of the present disclosure, the "protocol" may refer to standard protocols in the communication field, such as LTE protocol, NR protocol, and related protocols applied in future communication systems, which are not limited herein.

In order to facilitate understanding of the technical solution of the embodiments of the present disclosure, related technologies of the embodiments of the present disclosure are described as follows. The following related technologies can be arbitrarily combined with the technical solution of the embodiments of the present disclosure as optional solutions, all of which belong to the protection scope of the embodiments of the present disclosure.

### 1. Neuron structure

The neural network is an operation model composed of multiple neuron nodes connected to each other, in which the connection between nodes represent a weighted value from an input signal to an output signal, which is called weight. Each node performs a weighted summation on different input signals and outputs a result through a specific activation function. The neuron structure is illustrated in FIG. 2, where a₁, a₂..., aₙ and 1 are inputs of the neuron, w₁, w₂, ..., wₙ and b represent weights, Sum represents a summation function, f represents an activation function, and t represents an output result.

### 2. Neural network

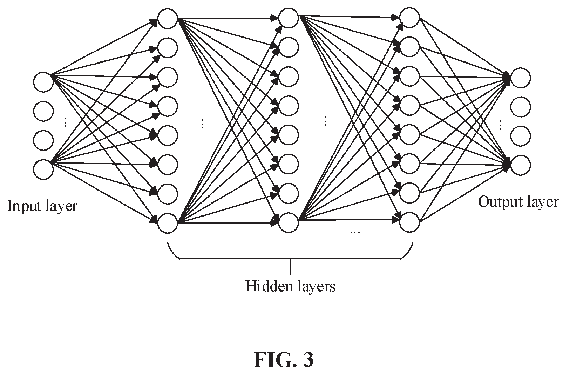

FIG. 3 illustrates a simple neural network. The neural network includes an input layer, hidden layers and an output layer. Through different connection manners of multiple neurons, combined with different weights and activation functions, different outputs may be generated, and then a mapping relationship from input to output may be fitted. Exemplarily, each node in a previous layer may be connected to all nodes in a next layer, forming a fully connected model. The fully connected model may also be referred to as a Deep Neural Network (DNN).

### 3. Model Acquisition

A neural network model may be trained through processes of data set construction, training, verification and testing. The training of neural network model may include offline training and online training. It is to be noted that offline training and online training are not mutually exclusive. For example, the network may first obtain a static training result through offline training for the data set, and the process may be called the offline training. During the use of the neural network model by the network or the terminal device, as the terminal device further measures and/or reports, the neural network model may continue to collect more data and perform real-time online training to optimize parameters of the neural network model, thereby achieving better inference and prediction results. After the neural network model is obtained, the corresponding model output can be inferred by inputting the currently obtained information into the neural network model.

When the neural network model is used for wireless communication between the terminal and the network device, the neural network model may be divided into a single-ended model and a dual-ended model. The single-ended model may be used if it is deployed on either the terminal device side or the network device side alone, and the training of the model may also be performed only on one side. The dual-ended model needs to be deployed in pairs on the terminal device side and network device side, and the models on both sides need to be trained together. That is to say, the models deployed on both sides are corresponding and cannot be used or updated separately.

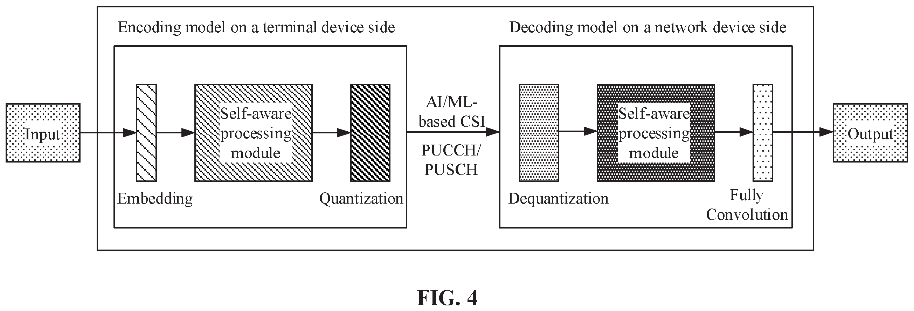

For example, a neural network model used for Channel State Information (CSI) feedback is a typical dual-ended model. On the terminal device side, there is a neural network model. The terminal device takes a measured channel information (such as feature vectors, beam information, delay information, etc.) as the input of the model to infer the corresponding CSI quantization bits. On the network device side, there will be a neural network model corresponding to the terminal device side. By taking the CSI quantization bits fed back from the terminal device as the input of the model, the network device can perform backward inference to obtain the corresponding channel information. Exemplarily, FIG. 4 illustrates a typical neural network model for CSI feedback (or CSI reporting). A neural network model (abbreviated as an encoding model) for encoding is deployed on the terminal device side, and a corresponding neural network model (abbreviated as a decoding model) for decoding is deployed on the network side. The terminal device outputs CSI quantization bits (such as PMI bits) based on the encoding model, and then feeds them back to the network device through an uplink channel (such as a Physical Uplink Shared Channel (PUSCH)/a Physical Uplink Control Channel (PUCCH)). The network device takes the CSI quantization bits fed back from the terminal device as the input of the decoding model, thereby outputting channel information (such as feature vectors, beam information, delay information, etc.) corresponding to the input on the terminal device side for downlink precoding. In addition, the terminal device may also perform performance monitoring on the encoding model, update the encoding model when the performance of the encoding model is not good and report it to the network device, so that the network device can update the decoding model simultaneously. Here, since the neural network model on the terminal device side is matched with the neural network model on the network device, if a model is updated, the terminal device and the network device need to notify each other through signaling to achieve the purpose of simultaneous model update.

For example, the neural network model for beam management may be a single-ended model. On the terminal device side, there is a neural network model. The terminal device measures beams in a second beam set (called Set B), and takes a measured beam signal quality as an input of the model to infer an index of an optimal beam in a first beam set (called Set A) and a signal quality corresponding to the optimal beam. This kind of downlink beam prediction belongs to spatial-domain DL beam prediction. In addition, there is another kind of downlink beam prediction, that is, temporal DL beam prediction.

Definition of spatial-domain beam prediction (i.e., BM-Case1): a spatial-domain prediction of downlink beams in Set A is performed by measuring beams (pairs) in Set B. Set B is either a subset of Set A, or Set B and Set A are two different sets of beams (pairs). Set B may be understood as a partial subset of beams (pairs), and Set A may be understood as a universal set of beams (pairs).

Definition of temporal-domain beam prediction (i.e., BM-Case2): an optimal beam (pair) in Set A in the future F times is predicted by measuring the beams (pairs) in Set B for K times. Set B may be a subset of Set A or may be the same as Set A. For a case where Set B and Set A are the same, the beam prediction is a simple temporal beam prediction. For a case where Set B is a subset of Set A, the beam prediction is a beam prediction in the spatial-domain and the temporal beam.

In addition, Set B and Set A may also be two different sets, Set B is a set of small number of wide beams, and Set A is a set of large number of narrow beams, and the small number of wide beams within Set B may roughly cover the large number of narrow beams within Set A in space.

It is to be understood that the output of the model may also be understood as an inference or prediction or estimation result, that is, inference, prediction and estimation may have the same meaning and may be replaced with each other.

The neural network model is used for wireless communication between the terminal and the network device, which may also be referred to as a wireless communication based on AI/ML. For the wireless communication based on AI/ML, the terminal device may use the neural network model deployed on the terminal device side to transmit information with the network device, such as CSI reporting (or CSI feedback), beam reporting, etc. However, as a communication environment of the terminal device changes, if the model on the terminal device side is not updated, a performance of the model may gradually deteriorate, resulting in poorer transmission performance of the terminal device, which may even be worse than a non-AI/ML manner. In view of this, the following technical solution of the embodiments in the present disclosure is proposed.

In order to facilitate understanding of the technical solution of the embodiments of the present disclosure, the technical solution of the present disclosure will be described in detail by specific embodiments below. The above related technologies can be combined with the technical solution of the embodiments of the present disclosure arbitrarily as an optional solution, all of which belong to the protection scope of the embodiments of the present disclosure. Embodiments of the present disclosure include at least some of the following.

It is to be noted that, an "AI model" described in the embodiments of the present disclosure may be referred to as a neural network model, an ML model, or an AI/ML model. Exemplarily, the AI model in the embodiments of the present disclosure may be used for CSI reporting, and an input and output of the AI model may refer to the above related description of the neural network model for CSI feedback. Exemplarily, the AI model in the embodiments of the present disclosure may be used for beam reporting, and the input and output of the AI model may refer to the above related description of the neural network model for beam management. The AI model in the present disclosure may also be used for other communication functions, such as channel coding, modulation, precoding, etc., which is not limited by the present disclosure.

It is to be noted that, unless otherwise specified, the "AI model" described in the embodiments of the present disclosure refers to a model on the terminal device side. The AI model on the terminal device side is used for information transmission between the terminal device and the network device.

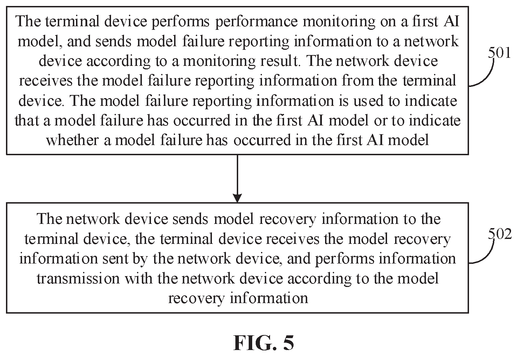

FIG. 5 is a first schematic flowchart of a model failure recovery method provided by an embodiment of the present disclosure. As illustrated in FIG. 5, the method includes all or part of the following.

At operation 501, the terminal device performs performance monitoring on a first Artificial Intelligence (AI) model, and sends model failure reporting information to a network device according to a monitoring result. The network device receives the model failure reporting information from the terminal device. The model failure reporting information is used to indicate that a model failure has occurred in the first AI model or to indicate whether a model failure has occurred in the first AI model.

The terminal device performs performance monitoring on the first AI model, and determines whether the model failure has occurred in the first AI model according to the monitoring result. The terminal device sends model failure reporting information to the network device based on whether the model failure has occurred in the first AI model. Accordingly, the network device receives the model failure reporting information sent by the terminal device.

The above performance monitoring performed by the terminal device may be periodic, semi-persistent, or aperiodic.

In some implementations, before the terminal device performs performance monitoring on the first AI model, the method further includes the following operations: the network device sends a first signaling to the terminal device; and the terminal device receives the first signaling sent by the network device. The first signaling is used to configure a period for above performance monitoring and/or a period for the terminal device to send the above model failure reporting information (that is, a reporting period for the model failure reporting information); or the first signaling is used to activate the terminal device to perform above performance monitoring and/or to activate the terminal device to send above model failure reporting information.

Exemplarily, the above performance monitoring is periodic, and the network device configures the period for performance monitoring through the first signaling (such as a RRC signaling). After obtaining the first signaling, the terminal device periodically performs performance monitoring on the first AI model according to the period configured by the first signaling until the configuration fails, and then stops monitoring.

Exemplarily, the above performance monitoring is semi-persistent, and the network device activates the terminal device through the first signaling (such as MAC signaling or DCI) to perform periodic performance monitoring. After obtaining the first signaling, the terminal device periodically performs performance monitoring on the first AI model until the terminal device receives the second signaling (such as MAC signaling or DCI) sent by network device for stopping monitoring. The second signaling is used to deactivate the terminal device for periodic performance monitoring.

Exemplarily, the above performance monitoring is aperiodic, and the network device activates the terminal device through the first signaling (such as DCI) for one or more consecutive performance monitoring. After obtaining the first signaling, the terminal device performs one or more consecutive performance monitoring.

Exemplarily, the reporting of the above model failure reporting information is periodic. The network device configures the period for the terminal device to send model failure reporting information through the first signaling (such as an RRC signaling). After obtaining the first signaling, the terminal device performs performance monitoring on the first AI model periodically before sending the model failure reporting information each time according to the period configured by the first signaling, and sends the corresponding model failure reporting information periodically according to the monitoring result until the configuration fails, then stops the performance monitoring and reporting of the model failure reporting information.

Exemplarily, the reporting of the above model failure reporting information is semi-persistent. The network device activates the terminal device through the first signaling (such as an MAC signaling or DCI) to report the model failure reporting information periodically. After obtaining the first signaling, the terminal device performs performance monitoring on the first AI model and reports the model failure reporting information periodically until the terminal device receives a second signaling (such as an MAC signaling or DCI) sent by the network device, then stops reporting the model failure reporting information. The second signaling is used to deactivate the terminal device from reporting the semi-persistent model failure reporting information. The reporting period for the model failure reporting information may be pre-configured by the RRC signaling.

Exemplarily, the reporting of the above model failure reporting information is aperiodic. The network device activates the terminal device through the first signaling (such DCI) to report one or more consecutive reporting of the model failure reporting information. After obtaining the first signaling, the terminal device performs one or more consecutive performance monitoring and reporting of the corresponding model failure reporting information.

In some implementations, the first signaling is further used to indicate a monitoring result type used for performance monitoring and/or a threshold for model failure, and the threshold is used by the terminal device to determine, based on the monitoring result, whether the model failure has occurred in the first AI model.

Exemplarily, the first signaling may indicate that the monitoring result type used for the above performance monitoring is a Block Error Ratio (BLER), throughput, CSI error, CSI consistency, beam signal quality measurement error, beam prediction consistency, Square of Generalized Cosine Similarity (SGCS) of channel information, Generalized Cosine Similarity (GCS) of channel information, positioning error, and the like. The signal quality herein may include, for example, at least one of: a Reference Signal Receiving Power (RSRP) (e.g. L1-RSRP), a Signal to Interference plus Noise Ratio (SINR) (e.g. L1-SINR), a Received Signal Strength Indicator (RSSI) (such as L1-RSSI), or a Reference Signal Receiving Quality (RSRQ) (such as L1-RSRQ). The signal quality is described by taking RSRP as an example in the following.

In some implementations, the first signaling is further used to configure resources that carry model failure reporting information. The resources that carry the model failure reporting information may be PUCCH resources or PUSCH resources. If the model failure reporting information is reported by PUCCH (that is, resources carrying the model failure reporting information are the PUCCH resources), the PUCCH resources used by the terminal device may be obtained by the first signaling. If the model failure reporting information is reported by the PUSCH (that is, the resources carrying the model failure reporting information are the PUSCH resources), a slot offset of the PUSCH may be obtained by the first signaling. In another implementations, the first signaling is further configured to indicate a CSI reporting configuration corresponding to the model failure reporting information, the CSI reporting configuration may configure reporting resources (such as the PUCCH resources or the PUSCH resources), and the terminal device determines the reporting resources used for the model failure reporting information according to the CSI reporting configuration.

The terminal device performs performance monitoring on the first AI model by comparing an output of the first AI model with a reference label. The reference label herein may also be referred to as an AI reference label.

The terminal device may perform one or more performance monitoring on the first AI model, and a corresponding monitoring result may be obtained for each performance monitoring. Every time the terminal device performs performance monitoring on the first AI model, the terminal device may obtain a monitoring result corresponding to this performance monitoring by comparing the output of the first AI model with the reference label.

In some implementations, the above reference label is a ground truth label corresponding to the output of the first AI model. The ground truth label may be obtained by the terminal device or notified to the terminal device by the network device. For example, the ground truth label may be beam information obtained by the terminal device based on a relative position between the terminal device and the network device, or the ground truth label may be ideal channel information, or the ground truth label may be accurate positioning information obtained by ideal means. The terminal device performs performance monitoring on the first AI model by comparing the output of the first AI model with the corresponding ground truth label.

In some implementations, the reference label is an output obtained based on a non-AI/ML manner. The terminal device performs performance monitoring on the first AI model by comparing the output of the first AI model with the output obtained based on a non-AI/ML manner.

The terminal device performs one or more performance monitoring on the first AI model, and after obtaining a corresponding monitoring result, the terminal device may determine whether the model failure has occurred in the first AI model based on the monitoring result. The operation that the terminal device determines whether the model failure has occurred in the first AI model according to the monitoring result may be realized by the following methods.

Method 1 (i.e., a method for a physical layer): in multiple performance monitoring sessions on the first AI model, when each of monitoring results falls below a threshold or is different from a preset value, or a statistical value of the monitoring results falls below the threshold, the terminal device determines that the model failure has occurred in the first AI model.

The terminal device performs multiple performance monitoring on the first AI model, and when each of monitoring results of the multiple performance monitoring falls below the preset threshold, or when the statistical value of the monitoring results of the multiple performance monitoring falls below the preset threshold, or each of monitoring results of the multiple performance monitoring is different from the preset value, the terminal device determines that the model failure has occurred. Exemplarily, the statistical value of the monitoring results may be, for example, an average value of the monitoring results over a period for time, such as a BLER average value, a throughput average value, a beam RSRP measurement error average value, and the like. Exemplarily, the statistical value of the monitoring results may be, for example, a proportion that the monitoring results are a preset value within a period for time, such as a proportion that the monitoring results are "beam prediction being consistent" within a period for time or a proportion that the monitoring results are "beam prediction being inconsistent" within a period for time. Exemplarily, the preset value may be an optimal beam obtained by another manner, the monitoring result of the performance monitoring may be an optimal beam predicted by the first AI model, and if optimal beams predicted for multiple times are all different from the preset value, the terminal determines that the model failure has occurred.

Method 2 (i.e., a method for a physical layer and a high layer): in each performance monitoring for the first AI model, when the monitoring result falls below a threshold (for example, if a measured SGCS falls below a preset threshold) or the monitoring result is different from a preset value (for example, a predicted optimal beam is different from an actual optimal beam), the terminal device reports a model failure sample to the high layer; if the high-level counts that the number of model failure samples reaches a specified maximum value, the terminal device determines that the model failure has occurred.

Here, in each performance monitoring on the first AI model by the terminal device, when the monitoring result falls below the threshold or the monitoring result is different from the preset value, the terminal device reports the model failure sample to the higher layer (such as an MAC layer). At the higher level, when a counter used to count model failure samples reaches a specified maximum value, the terminal device determines that the model failure has occurred.

In the embodiments of the present disclosure, the operation that the terminal device sends the model failure reporting information to the network device according to the monitoring result may be realized by the following methods.

In method a), if the monitoring result is that the model failure has occurred in the first AI model, the terminal device sends model failure reporting information to the network device, and the model failure reporting information is used to indicate that the model failure has occurred in the first AI model.

Here, only when the model failure has occurred in the first AI model, the terminal device sends model failure reporting information to the network device. That is, the transmission of the above model failure reporting information is triggered by an event, and the event is that the terminal device detects that the model failure has occurred in the first AI model. If the model failure has not occurred in the first AI model, the terminal device does not need to send model failure reporting information.

In some implementations, the above model failure reporting information may be sent through PUCCH resources for a Scheduling Request (SR).

In method b), the terminal device sends model failure reporting information to the network device, and the model failure reporting information is used to indicate whether the model failure has occurred in the first AI model.

Here, the terminal device sends model failure reporting information to the network device, and the model failure reporting information is used to indicate whether the model failure has occurred currently. The sending of the model failure reporting information may be triggered by a trigger signaling sent by the network device, or periodically performed through an uplink control channel. That is, regardless of whether the model failure has occurred in the first AI model, if the terminal device has received the trigger signaling sent by the network device, the terminal device will sends the model failure reporting information to the network device, or the terminal device periodically sends the model failure reporting information on the uplink control channel configured by the network device.

Exemplarily, 1-bit information in the model failure reporting information may be used to indicate whether the model failure has occurred.

In some implementations, the above model failure reporting information includes first indication information, and the first indication information is used to indicate one or more second AI models (or the first indication information includes information of one or more second AI models, or the model failure reporting information includes information of one or more second AI models).

In case 1), in some implementations, the above one or more second AI models are one or more AI models recommended by the terminal device after performing performance monitoring on candidate AI models.

The terminal device performs performance monitoring on candidate AI models, determines one or more AI models (i.e., one or more second AI models) whose monitoring result meets a preset condition, and reports the information of the one or more second AI models (i.e., the above first indication information) through the model failure reporting information. Here, the performance monitoring on the candidate AI model may be triggered by an event, for example, when the model failure has occurred in the first AI model, the performance monitoring is performed on the candidate AI models.

In some implementations, the above candidate AI models are pre-configured by the network device for the terminal device, or the candidate AI models are obtained by the terminal device through pre-training a basic AI model. Exemplarily, each candidate AI model may correspond to a CSI reporting configuration, and the network device indicates a candidate AI model through a CSI reporting configuration, thereby realizing the configuration for the candidate AI models. Exemplarily, the terminal device has a local pre-stored basic AI model, and the terminal device may pre-train the basic AI model to obtain a candidate AI model.

In some implementations, the above preset condition may be the monitoring result being optimal or the monitoring result being closest to a preset value. Exemplarily, when the first AI model is used for beam reporting, the terminal device selects one or more AI models, that have a highest probability of correctly predicting an index of the optimal beam (that is, the highest proportion of beam prediction consistency within a period for time), from the candidate AI models, or selects one or more AI models, that correctly predict the index of the optimal beam, from the candidate AI models, or selects one or more models, that have a smallest RSRP measurement error of the predicted beam, from the candidate AI models. Exemplarily, when the first AI model is used for CSI reporting, the terminal device selects one or more AI models with the highest SGCS from the candidate AI models, or selects one or more models whose corresponding channel capacity is closest to an expected channel capacity from the candidate AI models.

The terminal device may report the information of multiple second models through the model failure reporting information. If multiple terminal devices all have model failure and they use the same model, the network device may refer to the information of the multiple second models reported by each terminal device and select one of the second models for the multiple terminal devices.

In some implementations, the above first indication information is further used to indicate a monitoring result corresponding to each second AI model (or the first indication information further includes a monitoring result corresponding to each second AI model). The monitoring result here may be a value after quantification for a performance monitoring result. If the terminal device reports multiple second AI models and corresponding monitoring results through model failure reporting information, the network device may select an appropriate AI model for the terminal device from the multiple second AI models based on the monitoring results.

In some implementations, when there is no AI model, whose monitoring result meets a preset condition, among the above candidate AI models, the above first indication information is used to indicate information about no recommended model. For example, the first indication information has multiple indication states, where one indication state may be used to indicate information about no recommended model, and the other indication states may be used to indicate information of one or more reported second AI models. After receiving the first indication information for indicating the information about no recommended model, the network device may indicate another model to the terminal device for information transmission, or may indicate the terminal device for information transmission based on a non-AI/ML manner.

In some implementations, the above model failure reporting information may be reported to the network device together with the beam information.

In some implementations, the second AI model may be completely different from the first AI model, that is, a model structure and model parameters of the second AI model is different from those of the first AI model. In other implementations, the second AI model and the first AI model may be different only in model parameters but have the same model structure.

In case 2), in some implementations, the above one or more second AI model are one or more AI models obtained by the terminal device after performing online training on the first AI model.

The terminal device may perform online training (fine-tuning) on the first AI model to obtain the second AI model, and report the information of the second AI model to the network device through the model failure reporting information.

Exemplarily, the terminal device may perform online training on the first AI model based on latest collected training data, thereby updating the model parameters of the first AI model to obtain the second AI model, and report the information of the second AI model to the network device through the model failure reporting information. As an implementation, the terminal device may perform online training on the first AI model through different training data to obtain multiple second AI models respectively. As another implementation, the terminal device may perform training multiple times on the first AI model through the same training data to obtain multiple second AI models respectively.

Since the second AI model is obtained by the terminal device after performing online training on the first AI model, the second AI model may be different from the first AI model only in model parameters, but the model structures of two are the same.

In some implementations, the above first indication information may include information of one or more second AI models. The information of the second AI model here may include at least one of the following information: a model functionality, a model ID, a model index, a model structure, a model parameter, or an ID of a CSI reporting configuration corresponding to the model, where the model index refers to an index corresponding to the second AI model among the candidate AI models.

Exemplarily, the second AI model is different from the first AI model only in model parameters, but the model structures are the same. The information of the second AI model reported by the terminal device may include the model parameters, but does not include the model structure. Optionally, the information of the second AI model reported by the terminal device may also include the above other information of the second AI model.

In some implementations, a model function of the second AI model and a model function of the first AI model may be the same. In other implementations, the model function of the second AI model may be different from that of the first AI model. The model function are a function realized by the AI/ML model, such as: PMI reporting, RI/PMI/CQI reporting, beam information reporting, RSRP reporting, CSI compression, CSI prediction, CSI prediction and compression, channel coding-channel decoding, modulation-demodulation, pilot generation-channel estimation, transmitting and receiving radio frequency signal processing, etc.

In the above solution, the information of the second AI model recommended by the terminal device is carried by the model failure reporting information, so that the network device can quickly determine a new model, greatly shorten the time required for the application of the new model, and quickly update the model.

In some implementations, the above model failure reporting information includes first indication information. The first indication information is used to indicate whether the terminal device confirms a second AI model, or the first indication information is used to indicate whether the terminal device obtains an available second AI model.

Here, the terminal device may not report the information of one or more second AI models through the model failure reporting information, but may indicate (as indicated by the second indication information) whether the terminal device confirms the second AI model or whether an available second AI model is obtained through the model failure reporting information. Exemplarily, the terminal device may indicate the terminal device whether to confirm the second AI model or whether to obtain the available second AI model through 1-bit indication information (i.e., second indication information).

Here, the manner in which the terminal device confirms the second AI model (or obtains the available second AI model) may include, but is not limited to: 1) the terminal device obtains the available second AI model after performing performance monitoring on the candidate AI models, and confirms the second AI model. Here, the manner of obtaining the second AI model may refer to the description of the above case 1). 2) The terminal device obtains the available second AI model after performing online training on the first AI model, and confirms the second AI model. Here, the manner of obtaining the second AI model may refer to the description of the above case 2).

At operation 502, the network device sends model recovery information to the terminal device, the terminal device receives the model recovery information sent by the network device, and performs information transmission with the network device according to the model recovery information.

In some implementations, the above model recovery information may be sent by a broadcast signaling, a higher layer signaling, or a physical layer signaling.

In some implementations, the above model recovery information is used to indicate whether the terminal device uses a second AI model, which is reported by the terminal device through the model failure reporting information, to replace the first AI model for information transmission with the network device; or the above model recovery information is used to indicate an AI model from multiple second AI models reported by the terminal device through the model failure reporting information, to replace the first AI model for information transmission with the network device; or the above model recovery information is used to indicate whether the terminal device uses a second AI model confirmed by the terminal device to replace the first AI model, for information transmission with the network device; or the above model recovery information is used to indicate an AI model from candidate AI models to update the first AI model for information transmission with the network device; or the above model recovery information is used to indicate that the terminal device performs information transmission with the network device through a non-AI/ML manner.

Exemplarily, when the model failure reporting information includes information of one second AI model, the model recovery information is used to indicate whether the terminal device uses the reported second AI model to replace the first AI model for subsequent information transmission with the network device.

Exemplarily, when the model failure reporting information includes information of multiple second AI models, the model recovery information is used to indicate a second AI model in the multiple second AI models reported by the terminal device to replace the first AI model for subsequent information transmission with the network device.

Exemplarily, when the model failure reporting information includes indication information that the terminal device confirms the second AI model or obtains an available second AI model, the model recovery information is used to indicate whether the terminal device uses the confirmed second AI model to replace the first AI model for subsequent information transmission with the network device.

Exemplarily, when the model failure reporting information does not include information of the second AI model, or includes information of no recommended model, or includes indication information that the terminal device does not confirm the second AI model, the model recovery information is used to indicate one AI model from candidate AI models pre-configured to the terminal device to update the first AI model for subsequent information transmission with the network device.

Exemplarily, when the model failure reporting information does not include information of the second AI model, or includes information of no recommended model, or includes indication information that the terminal device does not confirm the second AI model, the model recovery information is used to indicate the terminal device to perform information transmission with the network device in a non-AI/ML manner.

In some implementations, the model recovery information may indicate a CSI reporting configuration, the CSI reporting configuration includes conventional non-AI/ML CSI reporting configuration information (the configuration information is used for non-AI/ML beam reporting or SCI reporting), or the CSI reporting configuration includes AI/ML-based CSI reporting configuration information (the configuration information is used for AL/ML-based beam reporting or CSI reporting). The terminal device may continue to perform AI/ML-based beam reporting or CSI reporting based on the configuration information, or use a configured non-AI/ML CSI reporting manner.

After receiving model recovery information, the terminal device may perform information transmission with the network device according to the model recovery information.

In some implementations, the terminal device replaces the first AI model with the target AI model indicated by the model recovery information, and uses the target AI model for information transmission with the network device. In other implementations, the terminal device updates a model structure of the first AI model with a target model structure indicated by the model recovery information, and/or updates model parameters of the first AI model with target model parameters indicated by the model recovery information to obtain the target AI model, and performs information transmission with the network device by using the target AI model. In other implementations, the terminal device performs information transmission with the network device by using a non-AI/ML manner indicated by the model recovery information.

Exemplarily, when the model recovery information indicates the terminal device to use a reported second AI model (that is, the target AI model is the second AI model) to replace the first AI model for subsequent information transmission with the network device, the terminal device uses the second AI model to replace the first AI model for subsequent information transmission with the network device.

Exemplarily, when the model recovery information indicates the terminal device to use a new AI model (the new AI model has the above target model structure and target model parameters) for subsequent information transmission with the network device, the terminal device updates the first AI model with the new AI model, that is, updates the first AI model with the above target model structure and target model parameters to obtain the target AI model, and the terminal device uses the target AI model for subsequent information transmission with the network device.

Exemplarily, when the model recovery information indicates the terminal device to use a new set of model parameters (the new model parameters are the above target model parameters) for subsequent information transmission with the network device, the terminal device uses the new model parameters to update the first AI model to obtain the target AI model, and the terminal device uses the target AI model for subsequent information transmission with the network device.

Exemplarily, when the model recovery information indicates the terminal device to use a non-AI/ML manner for information transmission with the network device, the terminal device performs information transmission with the network device by using a conventional non-AI/ML manner.

As a scenario, for a single-ended model scenario (the meaning of the single-ended model may refer to the description of the aforementioned related technology), the above first AI model is used for beam reporting, and accordingly, the operation that the terminal device performs information transmission with the network device means that the terminal device performs beam reporting to the network device. As another scenario, for a dual-ended model scenario (the meaning of the dual-ended model may refer to the description of the aforementioned related technology), the above first AI model is used for CSI reporting, and accordingly, the operation that the terminal device performs information transmission with the network device means that the terminal device performs CSI reporting to the network device.

In some implementations, after determining that the model failure has occurred or after sending the model failure reporting information or after receiving the model recovery information, and before performing information transmission with the network device according to the model recovery information, the terminal device performs information transmission with the network device by using one of the following manners.
1) The terminal device performs information transmission (such as beam reporting or CSI reporting) with the network device by using a non-AI/ML manner. Accordingly, the network device receives information sent by the terminal device in the non-AI/ML manner.

The operation that the terminal device performs information transmission with the network device by using the non-AI/ML manner may include the following situations.

1.1) When the first AI model is used for CSI reporting, the terminal device performs CSI reporting using a first codebook type. Accordingly, the network device receives the CSI reporting sent by the terminal device by using the first codebook type. The first codebook type is indicated by model recovery information, or is a pre-agreed codebook type between the terminal device and the network device.

1.2) When the first AI model is used for beam reporting, the terminal device performs beam reporting by using a non-AI/ML beam reporting manner. Accordingly, the network device receives beam reporting sent by the terminal device by using the non-AI/ML beam reporting manner.

The terminal device performs beam reporting based on a conventional method (that is, a non-AI/ML beam reporting manner) herein. For example, the terminal device measures beams in a second beam set and reports an index of an optimal beam in the second beam set and a corresponding RSRP without reporting an index of an optimal beam in the first beam set and a corresponding RSRP. In contrast, if a AI/ML-based beam reporting manner (that is, a AI model-based beam reporting manner) is adopted, since the AI model may predict the index of the optimal beam in the first beam set and the corresponding RSRP according to a measurement result of the second beam set, the terminal device reports the index of the optimal beam in the first beam set and the corresponding RSRP.

2) When the first AI model is used for CSI reporting or beam reporting, the terminal device performs CSI reporting or beam reporting by using a first CSI reporting configuration. Accordingly, the network device receives the CSI reporting or beam reporting sent by the terminal device by using the first CSI reporting configuration. The first CSI reporting configuration is indicated by the model recovery information, or is a pre-agreed CSI reporting configuration between the terminal device and the network device.

3) The terminal device performs information transmission (such as beam reporting or CSI reporting) with the network device by using the third AI model. Accordingly, the network device receives the information sent by the terminal device by using the third AI model. The third AI model is indicated by the model recovery information, or is an AI model pre-agreed between the terminal device and the network device. Here, the third AI model may be an AI model with better generalization performance, and may be applicable to different types of the terminal device and scenarios.

4) The terminal device does not perform information transmission with the network device. For example, the terminal device does not perform beam reporting or CSI reporting. That is, after a model failure occurs, the terminal device stops beam reporting or CSI reporting until a new model is configured and used.

The above manners may be understood as fallback modes adopted during model failure. By adopting the fallback mode during model failure, the performance loss caused by model performance deterioration can be reduced as much as possible and the continuity of information transmission can be ensured.

In some implementations, the above fallback modes may be used for one of the following time windows.
1) After the terminal device determines that the model failure has occurred, and before the terminal device performs information transmission with the network device according to the model recovery information. The operation that the terminal device performs information transmission with the network device based on the model recovery information may mean that the terminal device performs information transmission with the network device by using a new model indicated by the model recovery information, or the terminal device performs information transmission with the network device by using a non-AI/ML manner based on the model recovery information.
2) After the terminal device sends model failure reporting information, and before the terminal device performs information transmission with the network device according to the model recovery information.
3) After the terminal device receives model recovery information from the network device, and before the terminal device performs information transmission with the network device according to the model recovery information.

In some implementations, the terminal device determines, according to a model application time, a starting time for applying a target AI model indicated by the model recovery information; and performs information transmission with the network device by using the target AI model after the starting time.

Here, the model application time is reported by the terminal device to the network device through UE capability, or configured by the network device to the terminal device, and the model application time is used for the terminal device to determine the starting time for applying a target AI model indicated by the model recovery information. For example, the model application time may be indicated to the terminal device by the model recovery information along with other information of the target AI model.

Exemplarily, the model application time is reported by the terminal device to the network device through User Equipment (UE) capabilities, or the model application time is configured by the network device. The terminal device determines the starting time for applying the target AI model (i.e. the updated AI model) indicated by the model recovery information, and uses the target AI model for beam reporting or CSI reporting after the starting time. In this way, by negotiating the model application time, the network device can know whether the information reported by the terminal device is based on the updated AI model, and then process it accordingly. For the dual-ended model, the network device can update the model synchronously with the terminal device, thereby ensuring the accuracy of the recovery information output by the network side.

In some implementations, after the network device sends the model recovery information to the terminal device, the method further includes: the network device receives the information which is sent by the terminal device through the target AI model indicated by the model recovery information. In some implementations, for the scenario of the dual-ended model, the network device uses the network-side model corresponding to the target AI model to process information. Exemplarily, the network device uses the network-side model corresponding to the target AI model to decode information.

According to the technical solution of the embodiments of the present disclosure, a model failure recovery method is proposed, in which a terminal device performs performance monitoring on a first AI model, and sends model failure reporting information to a network device according to a monitoring result, and the model failure reporting information indicates that a model failure has occurred in the first AI model or whether the model failure has occurred in the first AI model. After receiving the model failure report information, the network device sends model recovery information to the terminal device, so that the terminal device can update the first AI model in real time based on the model recovery information, and then communicate with the network device based on the updated AI model, avoiding the loss of transmission performance caused by the deterioration of AI model performance.

The technical solution of the embodiments of the present disclosure is described in combination with specific application examples.

### First application example

The application example is applied to beam management in a single-ended model scenario. In this scenario, a first AI model is deployed on the terminal device side, and the first AI model is used for beam management (or beam reporting), which may be referred to as AI/ML-based beam management (or beam reporting). An input and output of the first AI model may refer to the aforementioned related description of the neural network model for beam management. Specifically, the terminal device uses measured RSRPs of multiple beams in the second beam set as an input of the first AI model, and inferences an index of an optimal beam in the first beam set and the corresponding RSRP based on the first AI model. The terminal device reports a result of inference to the network device (that is, the terminal device performs beam reporting).

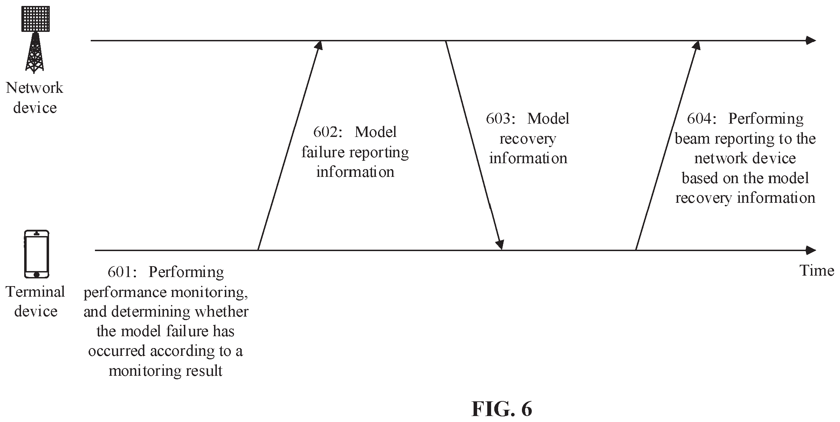

FIG. 6 is a second schematic flowchart of a model failure recovery method provided by an embodiment of the present disclosure. As illustrated in FIG. 6, the method includes all or part of the following.

At operation 601, the terminal device performs performance monitoring on the first AI model, and determines whether the model failure has occurred according to the monitoring result.

The above performance monitoring may be periodic, non-semi-persistent, or aperiodic.

In some implementations, before the terminal device performs performance monitoring on the first AI model, the method may further include the following operation: the terminal device receives the first signaling sent by the network device.

In an implementation, the first signaling is used to configure a period for the above performance monitoring and/or a period for the terminal device to send the above model failure reporting information (that is, a reporting period for the model failure reporting information). The above performance monitoring may be periodic herein. The reporting of the model failure reporting information may be periodic. In some implementations, the period for the above performance monitoring may be the same as the period for beam reporting, or may be the same as the period for reporting the model failure reporting information.

In another implementation, the first signaling is used to activate the terminal device to perform the above performance monitoring and/or activate the terminal device to send the above model failure reporting information. The above performance monitoring may be semi-persistent or aperiodic. If semi-persistent, the first signaling (e.g. MAC signaling) is used to activate the terminal device for periodic performance monitoring. If aperiodic, the first signaling (e.g., DCI) is used to trigger the terminal device for one or more consecutive performance monitoring. Here, the reporting of the above model failure reporting information may be semi-persistent or aperiodic. If semi-persistent, the first signaling (such as MAC signaling) is used to activate the terminal device to report the model failure reporting information periodically. If aperiodic, the first signaling (such as DCI) is used to trigger the terminal device to report one or more consecutive model failure reporting information.

In some implementations, the first signaling is further used to indicate a monitoring result type used for performance monitoring and/or a threshold for model failure, and the threshold is used by the terminal device to determine, based on the monitoring result, whether the model failure has occurred in the first AI model.

Exemplarily, the first signaling may indicate that the monitoring result type used for the performance monitoring is BLER, throughput, beam RSRP measurement error, beam prediction consistency, and the like.

In some implementations, the first signaling is further used to configure resources that carry model failure reporting information. The resources that carry the model failure reporting information may be PUCCH resources or PUSCH resources. If the model failure reporting information is reported by PUCCH (that is, resources carrying the model failure reporting information are PUCCH resources), the PUCCH resources used by the terminal device may be obtained by the first signaling. If the model failure reporting information is reported by the PUSCH (that is, the resources carrying the model failure reporting information are PUSCH resources), a slot offset of the PUSCH may be obtained by the first signaling. In another implementations, the first signaling is further configured to indicate a CSI reporting configuration corresponding to the model failure reporting information, the CSI reporting configuration may configure reporting resources (such as PUCCH resources or PUSCH resources), and the terminal device determines the reporting resources used for the model failure reporting information according to the CSI reporting configuration.

The manner of performing performance monitoring by the terminal device may be described with reference to the above description related to FIG. 5.

Several examples are given below to illustrate that the terminal device performs performance monitoring on the first AI model by comparing an output of the first AI model with a ground truth label.

In an example, the monitoring result type is beam prediction consistency, the ground true label is an index of an optimal beam in a first beam set, and an output of the first AI model is an index of an optimal beam estimated by the terminal device. The terminal device may obtain the monitoring result by comparing whether the ground true label and the output of the first AI model are consistent, that is, the monitoring result is "beam prediction being consistent" or "beam prediction being inconsistent" (hereinafter referred to as "beam prediction being consistency/inconsistency"). It is to be noted that the monitoring result of "beam prediction being consistent" indicates that the output of the AI model is consistent with the reference label, and the monitoring result of "beam prediction being inconsistent" indicates that the output of the AI model is inconsistent with the reference label. The beam index herein may also be described as a downlink reference signal resource index or a downlink reference signal index or a spatial filter index instead. The downlink reference signal resource index may be a CSI-RS resource indication (CRI) or an SSB resource indication (SSBRI).

In an example, the monitoring result type is abeam RSRP measurement error, the ground true label is an RSRP of the optimal beam in the first beam set, the output of the first AI model is an optimal RSRP estimated by the terminal device, and the terminal device may obtain the monitoring result by calculating the difference between the two RSRPs, that is, the monitoring result is an optimal beam RSRP measurement error.

Several examples are given below to illustrate that the terminal device performs performance monitoring on the first AI model by comparing an output of the first AI model with an output obtained based on a non-AI/ML manner.

In an example, the monitoring result type includes beam prediction consistency and an optimal beam RSRP measurement error. The process of obtaining the output based on the non-AI/ML manner includes: the terminal device measures beams in the first beam set at regular intervals to obtain an index of an optimal beam and a corresponding RSRP. The terminal device compares the output obtained based on the non-AI/ML manner with the output of the first AI model to obtain monitoring results. The output of the first AI model includes an index of an optimal beam estimated by the terminal device and a corresponding RSRP. The monitoring results include "beam prediction being consistency/inconsistency" and the optimal beam RSRP measurement error.

In an example, the monitoring result type is beam prediction consistency. The process of obtaining the output based on the non-AI/ML manner includes: the network device measures an uplink receiving beam to determine an optimal downlink transmitting beam, and notifies the terminal device of an index of the optimal downlink transmitting beam. The terminal device compares the output obtained based on the non-AI/ML manner with the output of the first AI model to obtain the monitoring result. The output of the first AI model is an index of an optimal downlink transmitting beam estimated by the terminal device, and the monitoring result is "beam prediction being consistent/inconsistent".

The manner of determining whether the model failure has occurred by the terminal device may be described with reference to the above description related to FIG. 5.

Several examples are given below to illustrate that the terminal device determines whether the model failure has occurred through a physical layer.

In an example, the terminal device performs multiple performance monitoring on the first AI model, and in each performance monitoring, by comparing whether the index of the optimal beam output by the first AI model is consistent with the reference label, the monitoring result (that is, the beam prediction beingconsistent/inconsistent) is obtained. If monitoring results obtained by N times consecutive performance monitoring are all "beam prediction being inconsistency" (or none of them are "beam prediction being consistency", that is, the preset value is "beam prediction being consistency"), the terminal device determines that the model failure has occurred in the first AI model.

In an example, the terminal device performs multiple performance monitoring on the first AI model, and in each performance monitoring, the terminal device obtains the monitoring result (i.e., the beam prediction being consistent/inconsistent) by comparing whether the index of the optimal beam output by the first AI model is consistent with the reference label. If a proportion of beam prediction inconsistent is higher than a preset threshold (e.g., 40%) within a period for time, it is determined that the model failure has occurred, or if the proportion of beam prediction consistency falls below a preset threshold (e.g., 60%) within a period for time, it is determined that the model failure has occurred.

Several examples are given below to illustrate that the terminal device determines whether the model failure has occurred through the physical layer and a high layer.

In an example, in each performance monitoring on the first AI model, the terminal device obtains the monitoring result (i.e., the beam prediction being consistent/inconsistent) by comparing whether the index of the optimal beam output by the first AI model is consistent with the reference label. If the monitoring result is beam prediction inconsistent, a model failure sample is reported to the MAC layer. At the MAC layer, when a counter for counting model failure samples reaches a specified maximum value, the terminal device determines that the model failure has occurred.

In an example, in each performance monitoring on the first AI model, the terminal device obtains the monitoring result (i.e., the beam prediction being consistent/inconsistent) by comparing whether the index of the optimal beam output by the first AI model is consistent with the reference label. The terminal device counts a proportion whose monitoring results are "beam prediction being consistent" within a monitoring period. If the proportion falls below the preset threshold, the model failure sample will be reported to the MAC layer. At the MAC layer, when a counter for counting model failure samples reaches a specified maximum value, the terminal device determines that the model failure has occurred.

In an example, in each performance monitoring on the first AI model, the terminal device obtains a monitoring result (i.e., an optimal beam RSRP measurement error) by comparing a difference between an optimal RSRP output by the first AI model and a reference label. If the optimal beam RSRP measurement error is higher than a preset threshold, the model failure sample is reported to the MAC layer. At the MAC layer, when a counter for counting model failure samples reaches a specified maximum value, the terminal device determines that the model failure has occurred.

At operation 602, the terminal device sends model failure reporting information to the network device according to whether the model failure has occurred.

Here, the specific implementation of the model failure reporting information may be referred to the above description related to FIG. 5.

In some implementations, the above model failure reporting information may be reported to the network device together with the beam information.

At operation 603, the network device sends model recovery information to the terminal device.

Here, the specific implementation of the model recovery information may be referred to the above description related to FIG. 5.

At operation 604, the terminal device performs beam reporting to the network device based on the model recovery information.

Here, the terminal device performs beam reporting to the network device based on the model recovery information. It can refer to the above description related to FIG. 5, and only need to understand "information transmission with the network device" in the related description of FIG. 5 as "beam reporting to the network device (i.e. beam information reporting)".

Further, after determining that the model failure has occurred and before performing the beam reporting according to the model recovery information, or after sending the model failure reporting information and before performing the beam reporting according to the model recovery information, or after receiving the model recovery information and before performing the beam information reporting according to the model recovery information, the terminal device may perform the beam reporting in one of the following manners.

In manner 1, the terminal device uses a non-AI/ML beam reporting manner for beam reporting. In other words, the terminal device performs beam reporting based on a conventional method. For example, the terminal device measures a beam (or a CSI-RS resource) in the second beam set, and reports an index of the optimal beam and a corresponding RSRP.

In manner 2, the terminal device uses the first CSI reporting configuration to perform beam reporting. The first CSI reporting configuration is indicated by the model recovery information, or is a pre-agreed CSI reporting configuration between the terminal device and the network device.

In manner 3, the terminal device uses a third AI model to perform beam reporting. The third AI model is indicated by the model recovery information, or the third AI model is a pre-agreed AI model between the terminal device and the network device.

In manner 4, the terminal device does not perform beam reporting. That is, after a model failure has occurred, the terminal device stops beam reporting until a new model is configured and used.

### Second application example

The application example is applied to CSI feedback in a dual-ended model scenario. In this scenario, a first AI model is deployed on the terminal device side, and the first AI model is used for CSI feedback (or CSI reporting), which may be referred to as CSI feedback (or CSI reporting) based on AI/ML. The input and output of the first AI model may refer to the aforementioned related description of the neural network model for CSI feedback. Specifically, the terminal device uses measured channel information (such as feature vectors, spatial domain information, delay information, etc.) as the input of the first AI model, and obtains corresponding CSI quantization bits based on inference of the first AI model. The terminal device reports an inferred result to the network device (that is, the terminal device performs CSI reporting). On the network device side, there will be an AI model corresponding to the first AI model. By taking the CSI quantization bits reported by the terminal device as an input of the AI model, the network device can perform backward inference to obtain corresponding channel information.

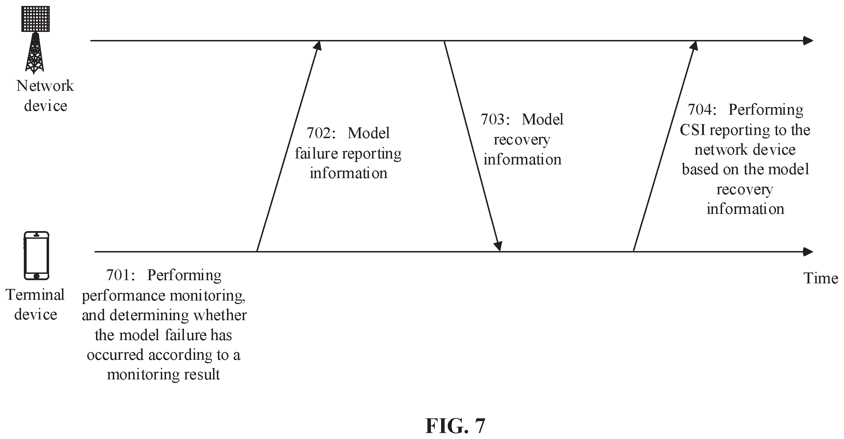

FIG. 7 is a third schematic flowchart of a model failure recovery method provided by an embodiment of the present disclosure. As illustrated in FIG. 7, the method includes all or part of the following.

At operation 701, the terminal device performs performance monitoring on the first AI model, and determines whether the model failure has occurred according to a monitoring result.

The above performance monitoring may be periodic, non-semi-persistent, or aperiodic.

In some implementations, before the terminal device performs performance monitoring on the first AI model, the method may further include the following operations: the terminal device receives the first signaling sent by the network device.

In an implementation, the first signaling is used to configure a period for the above performance monitoring and/or a period for the terminal device to send the above model failure reporting information (that is, a reporting period for the model failure reporting information). The above performance monitoring may be periodic herein. The reporting of the above model failure reporting information may be periodic.

In another implementation, the first signaling is used to activate the terminal device to perform the above performance monitoring and/or activate the terminal device to send the above model failure reporting information. The above performance monitoring may be semi-persistent or aperiodic herein. If semi-persistent, the first signaling (e.g. DCI) is used to activate the terminal device for periodic performance monitoring. If aperiodic, the first signaling (e.g., DCI) is used to trigger the terminal device for one or more consecutive performance monitoring. Exemplarily, the network device may trigger non-periodic CSI reporting through DCI while using the same DCI to trigger the terminal device for performance monitoring on the first AI model. Here, the reporting of the model failure reporting information may be semi-persistent or aperiodic. If semi-persistent, the first signaling (such as DCI) is used to activate the terminal device to report the model failure reporting information periodically. If aperiodic, the first signaling (such as DCI) is used to trigger the terminal device to report one or more consecutive model failure reporting information. Exemplarily, the network device may trigger non-periodic CSI reporting through DCI while using the same DCI to trigger the terminal device for performance monitoring on the first AI model and reporting of the corresponding model failure reporting information. In an implementation, the DCI may include CSI request information for triggering aperiodic CSI reporting, and include 1-bit indication information for indicating whether the terminal device includes model failure reporting information in the triggered CSI reporting.

In some implementations, the first signaling is further used to indicate a monitoring result type used for performance monitoring and/or a threshold for model failure, and the threshold is used by the terminal device to determine, based on the monitoring result, whether the model failure has occurred in the first AI model.

Exemplarily, the first signaling may indicate that the monitoring result type used for the performance monitoring is BLER, throughput, CSI error, CSI consistency, SGCS of channel information, GCS of channel information, and the like. Exemplarily, the first signaling may carry a CSI reporting configuration, and the CSI reporting configuration includes a period for performance monitoring, a monitoring result type used for performance monitoring, and a threshold corresponding to the monitoring result for determining whether the model failure has occurred.

In some implementations, the first signaling is further used to configure resources that carry model failure reporting information. The resources that carry the model failure reporting information may be PUCCH resources or PUSCH resource. If the model failure reporting information is reported by PUCCH (that is, resources carrying the model failure reporting information are PUCCH resources), the PUCCH resources used by the terminal device may be obtained by the first signaling. If the model failure reporting information is reported by the PUSCH (that is, the resources carrying the model failure reporting information are PUSCH resources), a slot offset of the PUSCH may be obtained by the first signaling.

The manner of performing performance monitoring by the terminal device may be described with reference to the above description related to FIG. 5.

Several examples are given below to illustrate that the terminal device performs performance monitoring on the first AI model by comparing the output of the first AI model with the ground truth label.

In an example, the monitoring result type is SGCS, and the ground true label is channel information measured by the terminal device. The terminal device may recover the output of the first AI model by using the corresponding model on the network device side, and use the SGCS between the recovered channel information and channel information measured by the terminal device as the monitoring result.

In an example, the monitoring result type includes a channel capacity or a throughput, and the ground true label is an expected channel capacity or an expected throughput. The terminal device may recover the output of the first AI model by using the corresponding model on the network device side to obtain a corresponding precoding matrix, calculate a corresponding channel capacity or throughput based on the precoding matrix, and compare the calculated channel capacity with the expected channel capacity, or compare a difference between the calculated throughput and the expected throughput as the monitoring result.

Several examples are given below to illustrate that the terminal device performs performance monitoring on the first AI model by comparing the output of the first AI model with the output obtained based on the non-AI/ML manner.

In an example, the monitoring result type is CSI error or CSI consistency. The terminal device may output RI and CQI by using the first AI model, obtain RI and CQI based on a traditional codebook, compare the RI/CQI output by the first AI model and the RI/CQI obtained by a traditional method, and use a difference between the two as the monitoring result. For example, the monitoring result may be whether the two RIs are consistent, or a difference between the two CQIs, or the like.

The manner of determining whether the model failure has occurred by the terminal device may be described with reference to the above description related to FIG. 5.

Several examples are given below to illustrate that the terminal device determines whether the model failure has occurred through the physical layer.

In an example, the terminal device performs multiple performance monitoring on the first AI model, and in each performance monitoring, the terminal device calculates an SGCS between the output of the first AI model and the reference label. If SGCSs obtained by multiple consecutive monitoring falls below a preset threshold (e.g., 0.8), the terminal device determines that the model failure has occurred. Alternatively, if a proportion of SGCS above a threshold over a period for time falls below a preset value (e.g. 90%), the terminal device determines that the model failure has occurred. Alternatively, if an average value of the SGCSs obtained from multiple monitoring falls below a preset threshold (e.g., 0.78), the terminal device determines that the model failure has occurred.

In an example, the terminal device performs multiple performance monitoring on the first AI model, and in each performance monitoring, the terminal device calculates a difference between the CQI output by the first AI model and a CQI obtained by the traditional method, and determines that the model failure has occurred if all of the differences between the CQIs obtained by multiple consecutive monitoring are greater than a preset threshold.

Several examples are given below to illustrate that the terminal device determines whether the model failure has occurred through the physical layer and the high layer.

In an example, in each performance monitoring on the first AI model, the terminal device calculates the SGCS between the output of the first AI model and the reference label, and reports a model failure sample to the MAC layer as long as the SGCS is monitored to be lower than a preset threshold. Alternatively, as long as an average SGCS in one monitoring period falls below a preset threshold, the model failure sample is reported to the MAC layer. At the MAC layer, when a counter for counting model failure samples reaches a specified maximum value, the terminal device determines that the model failure has occurred.

In an example, in each performance monitoring on the first AI model, the terminal device calculates a difference between the channel capacity corresponding to the output of the first AI model and the expected channel capacity, and reports a model failure sample to the MAC layer if the difference between the channel capacity corresponding to the output of the first AI model and the expected channel capacity is higher than a preset threshold (e.g., 1 dB). At the MAC layer, when a counter for counting model failure samples reaches a specified maximum value, the terminal device determines that the model failure has occurred.

At operation 702, the terminal device sends model failure reporting information to the network device according to whether the model failure has occurred.

Here, the specific implementation of the model failure reporting information may be referred to the above description related to FIG. 5.

In some implementations, the above model failure reporting information may be reported to the network device together with CSI feedback information obtained by the terminal device (such as CSI feedback information obtained based on the first AI model). If the model failure reporting information is reported together with the CSI feedback information, the two need to be reported after multiplexing. Further, when CSI omission is required, a priority of model failure reporting information is higher than that of CSI feedback information. That is, when a code rate of the PUSCH/PUCCH carrying the CSI is higher than a configuration value and the CSI omission is required, the CSI feedback information is omitted first, and the model failure reporting information is omitted finally. The advantage of this approach is that it can give priority to the reporting of model failure reporting information. If the model failure has occurred, the reported CSI feedback information will become unreliable. At this time, the importance of CSI feedback information is less than that of model failure reporting information.

At operation 703, the network device sends model recovery information to the terminal device.

Here, the specific implementation of the model recovery information may be referred to the above description related to FIG. 5.

It is to be noted that for dual-ended deployed models, such as a model used for CSI reporting, if one model on the network device side corresponds to models on the multiple terminal device sides, the network device may select an appropriate model for each terminal device based on monitoring results of multiple second AI models reported by multiple terminal device, so as to ensure that the network device can still correspond to models on multiple terminal device sides through the same model, thereby reducing complexity.

As an implementation, the network device may perform online training based on collected data, determine a new available model, and indicate the new available model to the terminal device through the model recovery information. The online training here may be performed based on an original model, so that the original model can be updated to ensure performance.

At operation 704, the terminal device performs CSI reporting to the network device based on the model recovery information.

Here, the operation that the terminal device performs CSI reporting to the network device based on the model recovery information may refer to the above description related to FIG. 5, and only need to understand "information transmission with the network device" in the related description of FIG. 5 as "CSI reporting to the network device".

As a case, when the model recovery information indicates that the terminal device uses an updated target AI model to replace the first AI model for CSI reporting, the terminal device uses the updated target AI model for CSI reporting to the network device. Accordingly, the network device decodes the CSI reporting by using a network-side model corresponding to the updated target AI model.

As another case, when the model recovery information indicates the terminal device to use a non-AI/ML manner for CSI reporting, the terminal device uses the non-AI/ML manner for CSI reporting to the network device. Accordingly, the network device receives CSI reporting from the terminal device by using the traditional manner.

Further, after determining that the model failure has occurred and before performing the beam reporting according to the model recovery information, or after sending the model failure reporting information and before performing the beam reporting according to the model recovery information, or after receiving the model recovery information and before performing the beam information reporting according to the model recovery information, the terminal device may perform the CSI reporting in one of the following manners.

In manner 1, the terminal device performs CSI reporting by using a non-AI/ML beam reporting manner. In other words, the terminal device performs CSI reporting based on a conventional method. For example, the terminal device performs CSI reporting using a first codebook type. The first codebook type is indicated by model recovery information, or is a pre-agreed codebook type between the terminal device and the network device. For example, the first codebook type may be a Type 1 codebook, a Type 2 codebook, an enhanced Type 2 codebook, or the like specified in a protocol. The configuration of the first codebook type may also be indicated by the model recovery information.

In manner 2, the terminal device performs CSI reporting by using the first CSI reporting configuration. The first CSI reporting configuration is indicated by the model recovery information, or is a pre-agreed CSI reporting configuration between the terminal device and the network device. For example, the model recovery information may indicate a CSI reporting configuration ID, or the CSI reporting configuration ID may be pre-agreed between the terminal device and the network device.

In manner 3, the terminal device performs CSI reporting by using a third AI model. The third AI model is indicated by the model recovery information, or the third AI model is a pre-agreed AI model between the terminal device and the network device.

In manner 4, the terminal device does not perform CSI reporting. That is, after a model failure has occurred, the terminal device stops CSI reporting until a new model is configured and used.

### Third application example

The application example may be applied to beam management in a single-ended model scenario. In this scenario, a first AI model is deployed on the terminal device side, and the first AI model is used for beam management (or beam reporting), which may be called AI/ML-based beam management (or beam reporting).

The terminal device uses measured RSRPs of multiple beams in the second beam set as an input of the first AI model, and inferences an index of an optimal beam in the first beam set and a corresponding RSRP based on the first AI model. The terminal device reports a result of inference to the network device (that is, the terminal device performs beam reporting). The second beam set may be understood as a measurement set, and the first beam set may be understood as a prediction set. Whether it is the first beam set or the second beam set, each beam set may include multiple beams, and the beams here may be instead described as downlink reference signals, such as Channel State Information-Reference Signal (CSI-RS). Accordingly, the index of beam may instead be described as a downlink reference signal resource index, such as a CRI.

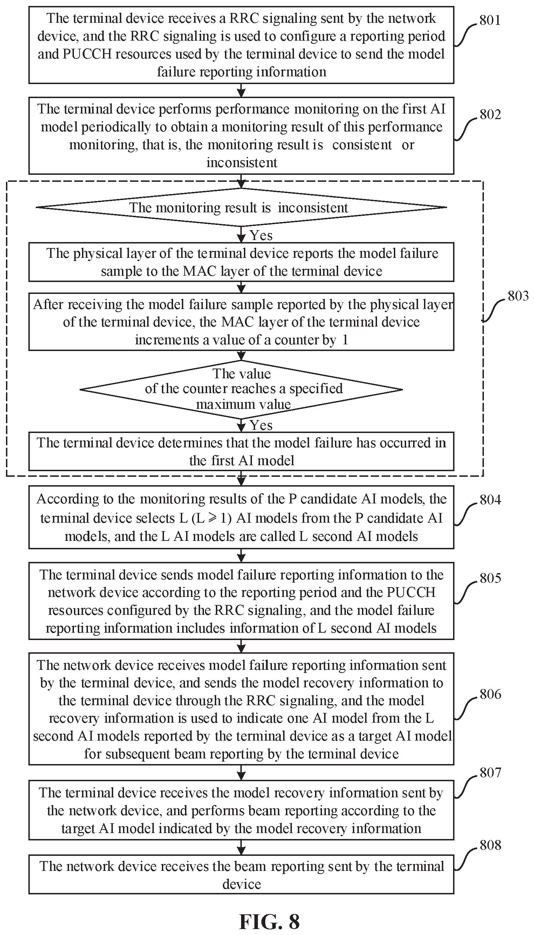

FIG. 8 is a fourth schematic flowchart of a model failure recovery method provided by an embodiment of the present disclosure. As illustrated in FIG. 8, the method includes all or part of the following.

At operation 801, the terminal device receives a RRC signaling sent by the network device, and the RRC signaling is used to configure a reporting period and PUCCH resources used by the terminal device to send the model failure reporting information.

Here, the model failure reporting information is reported periodically through the PUCCH.

At operation 802, the terminal device performs performance monitoring on the first AI model periodically, and a process of the performance monitoring includes: 1) the terminal device measures N (N > 1) beams in the second beam set to obtain RSRPs of the N beams; 2) the terminal device inputs RSRPs of N beams into the first AI model, and outputs an index of an optimal beam in the first beam set and a corresponding RSRP through inference of the first AI model; 3) the terminal device obtains a monitoring result of this performance monitoring by comparing whether the index of the optimal beam output by the first AI model is consistent with an AI reference label, that is, the monitoring result is "consistent" or "inconsistent".

Here, the AI reference label is obtained by the terminal device through a conventional beam measurement manner. Specifically, the terminal device measures M (M>1) beams in the first beam set to obtain RSRPs of M beams; and a beam index corresponding to a beam with optimal RSRP among the M beams is used as an AI reference label. Here, the period for the performance monitoring may be the same as the reporting period for the model failure reporting information. Alternatively, the reporting period for the model failure reporting information is an integer multiple of the period for the performance monitoring.

At operation 803, in each performance monitoring process, if the monitoring result is "inconsistent", the physical layer of the terminal device reports the model failure sample to the MAC layer of the terminal device. After receiving the model failure sample reported by the physical layer of the terminal device, the MAC layer of the terminal device increments a value of a counter by 1. When the value of the counter reaches a specified maximum value (such as 10), the terminal device determines that the model failure has occurred in the first AI model.

Here, the MAC layer of the terminal device has a dedicated counter for counting the number of model failure samples.

At operation 804, after the model failure has occurred in the first AI model, the terminal device performs performance monitoring on P (P≥1) candidate AI models, and the performance monitoring process may refer to the above operation 802.

Here, the P candidate AI models may be pre-configured by the network device to the terminal device, for example, each candidate AI model may correspond to a CSI reporting configuration, and the network device indicates a candidate AI model to the terminal device through a CSI reporting configuration.

At operation 805, according to the monitoring results of the P candidate AI models, the terminal device selects L (L≥1) AI models whose monitoring results are "consistent" from the P candidate AI models, and the L AI models are called L second AI models.

At operation 806, the terminal device sends model failure reporting information to the network device according to the reporting period and the PUCCH resources configured by the RRC signaling, and the model failure reporting information includes information of L second AI models.

In some implementations, the model failure reporting information may further include 1-bit indication information for indicating whether the model failure has occurred, for example, a 1-bit value of 1 indicates that the model failure has occurred, a value of 0 indicates that the model failure has not occurred, or, for example, a 1-bit value of 0 indicates that the model failure has occurred, and a value of 1 indicates that the model failure has not occurred.

In some implementations, the model failure reporting information may further include an RSRP corresponding to an index of an optimal beam inferred by each second AI model among the L second AI models, and may be used for the network device to select an appropriate AI model from the L second AI models to replace or update the first AI model.

Here, the information of the second AI model may be a model index or a model ID of the second AI model, and the model index refers to an index corresponding to the second AI model among the candidate AI models.

At operation 807, the network device receives model failure reporting information sent by the terminal device, and sends the model recovery information to the terminal device through the RRC signaling, and the model recovery information is used to indicate one AI model from the L second AI models reported by the terminal device as a target AI model for subsequent beam reporting by the terminal device.

Here, the model recovery information includes a model index or a model ID of the target AI model, and the model index refers to an index corresponding to the target AI model among the candidate AI models.

As a case, if the terminal device reports multiple second AI models (i.e., L>1), the network device may select an appropriate AI model for the terminal device as a target AI model for subsequent beam reporting by the terminal device according to the RSRP corresponding to the index of the optimal beam inferred by each second AI model included in the model failure reporting information.

As another case, if the terminal device reports a second AI model (i.e. L=1), the network device may directly indicate whether the terminal device uses the reported second AI model as the target AI model through the model recovery information for subsequent beam reporting by the terminal device.

At operation 808, the terminal device receives the model recovery information sent by the network device, and performs beam reporting according to the target AI model indicated by the model recovery information, and the beam reporting process includes: 1) the terminal device measures N (N>1) beams in the second beam set to obtain RSRPs of the N beams; 2) the terminal device inputs the RSRPs of N beams into the target AI model, and outputs the index of the optimal beam in the first beam set and the corresponding RSRP by inference of the target AI model; 3) the terminal device reports the index of the optimal beam and corresponding RSRP obtained by inference of the target AI model to the network device.

After operation 804 and before operation 808, the terminal device may perform beam reporting in a non-AI/ML manner, that is, the terminal device performs beam reporting in a conventional manner, and the process of performing beam reporting in the non-AI/ML manner (or conventional manner) includes: 1) the terminal device measures N (N>1) beams in the second beam set to obtain RSRPs of N beams; 2) the terminal device reports the beam with the optimal RSRP among the N beams and the corresponding RSRP to the network device.

At operation 809, the network device receives the beam reporting sent by the terminal device.

The method for determining the model failure described in the above operation 803 may also have other alternatives. For example, in multiple consecutive performance monitoring processes, if a proportion of "inconsistent" monitoring results exceeds a specified proportion threshold (such as 30%), the terminal device determines that the model failure has occurred in the first AI model. Exemplarily, the terminal device performs 8 consecutive performance monitoring processes, of which 3 monitoring results are "inconsistent", so the proportion of "inconsistent" monitoring results is 3/8=37.5%, exceeding the proportional threshold of 30%. The terminal device determines that the model failure has occurred in the first AI model.

There may be other alternatives to the performance monitoring process described in the above operation 802, and other alternatives may be described with reference to the related description of FIG. 5 and FIG. 6. As an example, other alternatives may include the following scheme in which the process of performance monitoring includes: 1) the terminal device measures N (N>1) beams in the second beam set to obtain RSRPs of the N beams; 2) the terminal device inputs RSRPs of N beams into the first AI model, and outputs an index of an optimal beam in the first beam set and a corresponding RSRP through inference of the first AI model; 3) the terminal device compares the difference between the RSRP corresponding to the index of the optimal beam output by the first AI model and the AI reference label to obtain the monitoring result of this performance monitoring, that is, the monitoring result is "optimal RSRP error".

Here, the AI reference label is obtained by the terminal device through a conventional beam measurement manner. Specifically, the terminal device measures M (M>1) beams in the first beam set to obtain RSRPs of M beams; and a beam with optimal RSRP among RSRPs of M beams is used as the AI reference label.

Accordingly, there may be other alternatives to the method for determining the model failure described in the above operation 803, and other alternatives may be described with reference to the related description of FIG. 5 and FIG. 6. As an example, other alternatives may include the following scheme in which, in each performance monitoring process, if "optimal RSRP error" of the monitoring result is greater than or equal to a set threshold, the physical layer of the terminal device reports the model failure sample to the MAC layer. After receiving the model failure sample reported by the physical layer, the MAC layer of the terminal device increments the value of the counter by 1. When the value of the counter reaches the specified maximum value (such as 10), the terminal device determines that the model failure has occurred in the first AI model.

The PUCCH resources described in operation 801 and operation 806 above may have other alternatives, such as PUSCH resources.

It is to be noted that, in this application example, the explanation provided by taking the example where the terminal device periodically performs performance monitoring on the first AI model and reports model failure reporting information may also include other alternative solutions. For example, the terminal device performs performance monitoring on the first AI model and reports model failure reporting information in a manner of semi-persistent or aperiodic. For semi-persistent or aperiodic, there may have other alternative solutions for operation 801. For example, in the case of semi-persistent, the terminal device receives MAC signaling sent by the network device, and the MAC signaling is used to activate the terminal device to perform periodic performance monitoring and report model failure reporting information. For example, in the case of aperiodic, the terminal device receives the DCI sent by the network device, and the DCI is used to trigger the terminal device to perform one or more consecutive performance monitoring and report model failure reporting information.

### Fourth application example

The application example is applied to CSI feedback in a dual-ended model scenario. In this scenario, a first AI model is deployed on the terminal device side, and the first AI model is used for CSI feedback (or CSI reporting), which may be called AI/ML-based CSI feedback (or CSI reporting).

The terminal device uses measured channel information (such as channel feature vectors, channel spatial domain information, channel delay information, etc.) as the input of the first AI model, and obtains corresponding CSI quantization bits (such PMI quantization bits) based on inference of the first AI model. The terminal device reports the inferred result to the network device (that is, the terminal device performs CSI reporting). On the network device side, there will be an AI model corresponding to the first AI model. By taking the CSI quantization bits reported by the terminal device as the input of the AI model, the network device may perform backward inference to obtain the corresponding channel information.

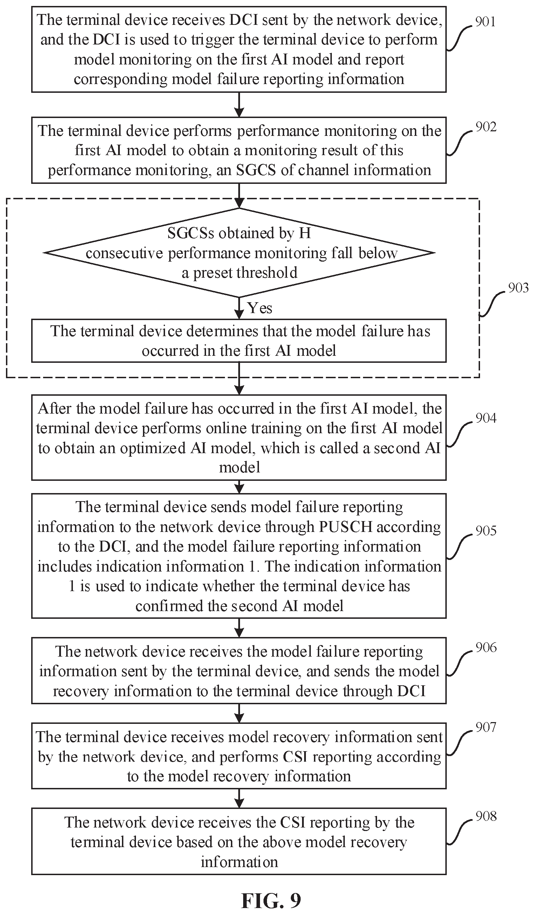

FIG. 9 is a fifth schematic flowchart of a model failure recovery method provided by an embodiment of the present disclosure. As illustrated in FIG. 9, the method includes all or part of the following.

At operation 901, the terminal device receives DCI sent by the network device, and the DCI is used to trigger the terminal device to perform model monitoring on the first AI model and report corresponding model failure reporting information.

Here, the DCI may further include CSI request information for triggering CSI reporting, and may further include 1-bit indication information. The indication information is used for indicating whether the terminal device includes model failure reporting information in a DCI-triggered CSI reporting. For example, a 1-bit value of 1 indicates that model failure reporting information is included in the DCI-triggered CSI reporting, or, for example, a 1-bit value of 0 indicates that model failure reporting information is included in the DCI-triggered CSI reporting.

In some implementations, the DCI may also indicate a time interval between the DCI and a PUSCH carrying the model failure reporting information.

At operation 902, the terminal device performs performance monitoring on the first AI model, and the performance monitoring process includes: 1) the terminal device performs CSI measurement to obtain corresponding channel information (such as channel feature vector, channel spatial domain information, channel delay information, etc.), and the measured channel information is channel information obtained by a non-AI/ML manner; 2) the terminal device inputs the measured channel information into the first AI model, and performs encoding processing through the first AI model to obtain CSI quantization bits (such as PMI quantization bits); 3) the terminal device inputs the CSI quantization bits obtained by the first AI model to a third AI model, the third AI model being a decoding model corresponding to the first AI model, and obtains estimated channel information by decoding processing of the third AI model; 4) the terminal device compares the estimated channel information with channel information obtained by the non-AI/ML manner to obtain the monitoring result of this performance monitoring, and the monitoring result is "an SGCS of the estimated channel information and the channel information obtained by the non-AI/ML manner".

At operation 903, if SGCSs obtained by H (H≥1) consecutive performance monitoring fall below a preset threshold (e.g., 0.8), the terminal device determines that the model failure has occurred in the first AI model.

Here, the H times performance monitoring may be performance monitoring sessions performed between the terminal device receiving the DCI and the terminal device sending the corresponding model failure reporting information.

At operation 904, after the model failure has occurred in the first AI model, the terminal device performs online training on the first AI model to obtain an optimized AI model, which is called a second AI model.

Here, the terminal device may perform online training on the first AI model based on newly collected training data to obtain a set of new model parameters, and the new model parameters are model parameters of the second AI model. Since the second AI model is obtained based on online training of the first AI model, the second AI model and the first AI model have the same model structure but different model parameters.

At operation 905, the terminal device sends model failure reporting information to the network device through PUSCH according to the DCI, and the model failure reporting information includes indication information 1. The indication information 1 is used to indicate whether the terminal device has confirmed the second AI model (through online training).

Here, the indication information 1 may be 1-bit indication information for indicating whether the terminal device has confirmed the second AI model (through online training), or for indicating whether the terminal device has obtained the available second AI model (through online training). For example, a 1-bit value of 1 indicates that the terminal device has confirmed the second AI model or has obtained the available second AI model, and a value of 0 indicates that the terminal device does not confirm the second AI model or does not obtain the available second AI model.

In some implementations, the model failure reporting information may further include 1-bit indication information 2 for indicating whether the model failure has occurred, for example, a 1-bit value of 1 indicates that the model failure has occurred, a value of 0 indicates that the model failure has not occurred.

In some implementations, the above model failure reporting information may be reported to the network device together with CSI quantization bits (i.e., CSI feedback information) obtained based on the first AI model.

At operation 906, the network device receives the model failure reporting information sent by the terminal device, and sends the model recovery information to the terminal device through DCI.

In operation 906, if the model failure reporting information indicates that the terminal device has confirmed the second AI model, the network device may indicate whether the terminal device uses the confirmed second AI model to replace the first AI model for subsequent CSI reporting through the model recovery information. If the model failure reporting information indicates that the terminal device does not confirmed the second AI model, the network device may indicate one AI model for subsequent CSI reporting from candidate AI models pre-configured to the terminal device through the model recovery information, or indicate the terminal device to use the non-AI/ML manner for CSI reporting through the model recovery information.

At operation 907, the terminal device receives model recovery information sent by the network device, and performs CSI reporting according to the model recovery information.

In operation 907, in case 1), if the model recovery information indicates that the terminal device uses the second AI model to replace the first AI model for subsequent CSI reporting, the terminal device performs CSI reporting by using the second AI model. In case 2), if the model recovery information indicates the terminal device to use a non-AI/ML manner for CSI reporting, the terminal device performs CSI reporting by using the non-AI/ML manner.

In some implementations, for the above case 1), the terminal device reports the model application time to the network device, for example, to the network device through UE capabilities. The terminal device determines a starting time for applying a second AI model according to the model application time, and uses the second AI model to perform CSI reporting after the starting time. According to the model application time, the network device may update the model synchronously with the terminal device, thereby ensuring that an AI model used by the network device side matches the second AI model on the terminal device side. In this way, when the AI model on the network device side decodes CSI quantization bits (such as PMI quantization bits) from the second AI model, more accurate channel information can be recovered.

Here, the process in which the terminal device performs CSI reporting by using the second AI model includes: 1) the terminal device performs CSI measurement to obtain corresponding channel information (such as channel feature vector, channel spatial domain information, channel delay information, etc.); 2) the terminal device inputs the measured channel information into the second AI model, and performs encoding processing through the second AI model to obtain CSI quantization bits (such as PMI quantization bits); 3) the terminal device reports the CSI quantization bits obtained by the second AI model to the network device.

Here, the process in which the terminal device performs CSI reporting by using a non-AI/ML manner includes: 1) the terminal device performs CSI measurement to obtain corresponding channel information (such as channel feature vectors, channel spatial domain information, channel delay information, etc.); 2) the terminal device obtains corresponding CSI information (such as RI/PMI/CQI) based on channel information and a pre-agreed codebook; 3) the terminal device reports CSI information (such as RI/PMI/CQI) to the network device.

The terminal device does not perform CSI reporting after operation 903 and before operation 907. That is, after the model failure has occurred in the first AI model, if the terminal device does not receive the model recovery information sent by the network device, the terminal device stops CSI reporting until the terminal device receives the model recovery information sent by the network device, and the model recovery information indicates that the second AI model is used to replace the first AI model for subsequent CSI reporting or indicates that CSI reporting is performed in the non-AI/ML manner.

At operation 908, the network device receives the CSI reporting by the terminal device based on the above model recovery information.

In operation 908, if the model recovery information indicates that the terminal device uses the second AI model to replace the first AI model for subsequent CSI reporting, the network device decodes the received CSI information using an AI model on the network device side corresponding to the second AI model. If the model recovery information indicates that the terminal device performs CSI reporting by using the non-AI/ML manner, the network device receives CSI information sent by the terminal device by using a conventional manner.

There may be other alternatives to the method for determining the model failure described in the above operation 903, and other alternatives may be described with reference to the related description of FIG. 5 and FIG. 7. As an example, other alternatives may include a scheme in which if a proportion of SGCSs below a preset first threshold (e.g., 0.8) in H consecutive performance monitoring is higher than a preset second threshold (e.g., 0.4), the terminal device determines that the model failure has occurred in the first AI model. For example, in the H performance monitoring sessions, if the monitored SGCSs for F times falls below the first threshold (such as 0.8), then if a ratio F/H is higher than the preset second threshold (such as 0.4), it is determined that the model failure has occurred. As an example, other alternatives may include a scheme in which, in each performance monitoring process, if a monitored SGCS falls below a preset threshold (e.g., 0.8), the physical layer of the terminal device reports the model failure sample to the MAC layer. After receiving the model failure sample reported by the physical layer, the MAC layer of the terminal device increments the value of the counter by 1. When the value of the counter reaches a specified maximum value (such as 10), the terminal device determines that the model failure has occurred in the first AI model. Here, the MAC layer of the terminal device has a dedicated counter for counting the number of model failure samples.

There may be other alternatives to the method for obtaining the second AI model described in the above operation 904, and other alternatives may be described with reference to the related description of FIG. 5 and FIG. 6. As an example, other alternatives may include a scheme in which the terminal device selects L (L≥1) AI models whose monitoring results of SGCSs are greater than or equal to a preset threshold (for example, 0.8) from the P candidate AI models according to monitoring results of the P candidate AI models, and the L AI models are called L second AI models.

Accordingly, there may be other alternatives to the content indicated by the model failure reporting information in the above operation 905, for example, the model failure reporting information includes information of L second AI models.

Accordingly, there may be other alternatives to the content indicated by the model recovery information in the above operation 906, for example, the model recovery information is used to indicate one AI model from the L second AI models reported by the terminal device as a target AI model for subsequent CSI reporting by the terminal device.

It is to be noted that, in this application example, the explanation provided by taking the example where the terminal device periodically performs performance monitoring on the first AI model and reports model failure reporting information may also include other alternative solutions. For example, the terminal device performs performance monitoring on the first AI model and reports model failure reporting information in a manner of semi-persistent or periodic. For semi-persistent or periodic, there may have other alternative solutions for operation 901. For example, in the case of semi-persistent, the terminal device receives an MAC signaling sent by the network device, and the MAC signaling is used to activate the terminal device to perform periodic performance monitoring and report model failure reporting information. For example, in the case of periodic, the terminal device receives an RRC signaling from the network device, and the RRC signaling is used to configure the reporting period and PUCCH or PUSCH resources used by the terminal device to send model failure reporting information.

Preferred embodiments of the present disclosure have been described in detail with reference to the accompanying drawings, but the present disclosure is not limited to the specific details of the above embodiments. Within the scope of the technical concept of the present disclosure, various simple modifications can be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, various embodiments of the present disclosure may be combined with each other arbitrarily so long as they do violate the idea of the present disclosure, and they should likewise be regarded as the disclosed content of the present disclosure. For another example, on the premise of no conflict, various embodiments described in the present disclosure and/or the technical features in each embodiment can be arbitrarily combined with the related art, and the technical solution obtained after combination should also fall within the scope of protection of the present disclosure.

It is to be understood that in various method embodiments of the present disclosure, the size of the sequence numbers of the above-mentioned processes does not mean the order of execution, and the execution order of each process is to be determined by its function and inherent logic, and should not be limited in any way to the implementation process of the embodiments of the present disclosure. Further, in embodiments of the present disclosure, the terms "downlink", "uplink" and "sidelink" are used to denote the transmission direction of the signal or data, where "downlink" is used to denote the transmission direction of the signal or data as a first direction transmitted from the site to the user equipment of the cell, and "uplink" is used to denote the transmission direction of the signal or data as a second direction transmitted from the user equipment of the cell to the site, "sidelink" is used to denote the transmission direction of the signal or data as a first direction transmitted from a user equipment 1 to a user equipment 2. For example, "downlink signal" denotes that the transmission direction of the signal is the first direction. In the present disclosure, the term "and/or" is used to describe an association relationship of associated objects, and represents that there may be three relationships. Specifically, A and/or B may represent the following three situations: i.e., independent existence of A, existence of both A and B and independent existence of B. In addition, the character "/" in the present disclosure generally represents that an "or" relationship is formed between the previous and next associated objects.

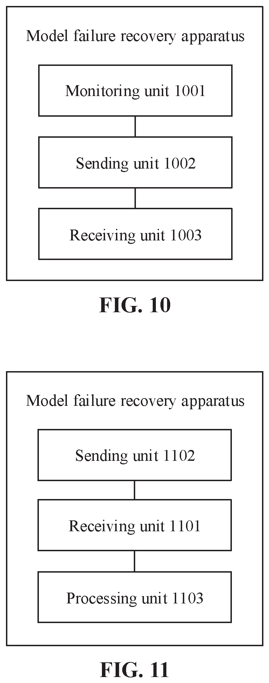

FIG. 10 is a first schematic diagram of a structural composition of a model failure recovery apparatus provided by the embodiment of the present disclosure, and the measurement apparatus is applied to a terminal device. As illustrated in FIG. 10, the apparatus includes a monitoring unit 1001, a sending unit 1002 and a receiving unit 1003.

The monitoring unit 1001 is configured to perform monitor performance monitoring on a first Artificial Intelligence (AI) model.

The sending unit 1002 is configured to send model failure reporting information to a network device according to a monitoring result. The model failure reporting information is used to indicate that a model failure has occurred in the first AI model or to indicate whether a model failure has occurred in the first AI model.

The receiving unit 1003 is configured to receive model recovery information sent by the network device.

The sending unit 1002 is further configured to perform information transmission with the network device according to the model recovery information.

In some implementations, the receiving unit 1003 is configured to receive a first signaling sent by the network device. The first signaling is used to configure a period for performance monitoring, and/or the first signaling is used to activate the terminal device to perform performance monitoring.

In some implementations, the first signaling is used to configure a period for performance monitoring and/or a period for the terminal device to send the model failure reporting information; or the first signaling is used to activate the terminal device to perform performance monitoring and/or activate the terminal device to send the model failure reporting information.

In some implementations, the monitoring unit 1001 is configured to perform performance monitoring on the first AI model by comparing an output of the first AI model with a reference label. The reference label is a ground truth label corresponding to the output of the first AI model, or the reference label is an output obtained based on a non-AI/Machine Learning (ML) manner.

In some implementations, the monitoring unit 1001 is configured to, in multiple performance monitoring on the first AI model, when each of monitoring results falls below a threshold or is different from a preset value, or a statistical value of the monitoring results falls below the threshold, determine that the model failure has occurred in the first AI model.

In some implementations, the monitoring unit 1001 is configured to, in each performance monitoring on the first AI model, when a monitoring result falls below a threshold or is different from a preset value, report a model failure sample to a higher layer; and when the higher layer counts that a number of model failure samples has reached a specified maximum value, determine that the model failure has occurred.

In some implementations, the sending unit 1002 is configured to send the model failure reporting information to the network device when the monitoring result indicates that the model failure has occurred in the first AI model, where the model failure reporting information is used to indicate that the model failure has occurred in the first AI model; or send the model failure reporting information to the network device, where the model failure reporting information is used to indicate whether the model failure has occurred in the first AI model.

In some implementations, sending of the model failure reporting information is triggered by an event, or triggered by a triggering signaling sent by the network device, or periodically performed through an uplink control channel.

In some implementations, the model failure reporting information comprises first indication information, the first indication information is used to indicate one or more second AI models, or used to indicate whether the terminal device confirms a second AI model; the second AI model is an AI model recommended by the terminal device after performing performance monitoring on candidate AI models, or the second AI model is an AI model obtained by the terminal device after performing online training on the first AI model.

In some implementations, the candidate AI models are configured by the network device for the terminal device, or the candidate AI models are obtained by the terminal device through pre-training a basic AI model.

In some implementations, the first indication information is further used to indicate a monitoring result corresponding to each second AI model.

In some implementations, when there is no AI model, whose monitoring result meets a preset condition, among the candidate AI models, the first indication information is used to indicate information about no recommended model.

In some implementations, the model recovery information is used to indicate whether the terminal device uses a second AI model, which is reported by the terminal device through the model failure reporting information, to replace the first AI model for information transmission with the network device; or the model recovery information is used to indicate an AI model from multiple second AI models reported by the terminal device through the model failure reporting information, to replace the first AI model for information transmission with the network device; or the model recovery information is used to indicate whether the terminal device uses a second AI model confirmed by the terminal device to replace the first AI model, for information transmission with the network device; or the model recovery information is used to indicate an AI model from candidate AI models to update the first AI model for information transmission with the network device; or the model recovery information is used to indicate that the terminal device performs information transmission with the network device through a non-AI/ML manner.

In some implementations, the sending unit 1002 is configured to replace the first AI model with a target AI model indicated by the model recovery information, and perform information transmission with the network device by using the target AI model; or update a model structure of the first AI model with a target model structure indicated by the model recovery information, and/or update a model parameter of the first AI model with a target model parameter indicated by the model recovery information to obtain the target AI model, and perform information transmission with the network device by using the target AI model; or perform information transmission with the network device through a non-AI/ML manner indicated by the model recovery information.

In some implementations, the apparatus further includes: a determining unit ,which is configured to determine, according to a model application time, a starting time for applying a target AI model indicated by the model recovery information. The model application time is reported by the terminal device to the network device through User Equipment (UE) capabilities, or the model application time is configured by the network device for the terminal device.

The sending unit 1002 is configured to perform information transmission with the network device by using the target AI model after the starting time.

In some implementations, the sending unit 1002 is configured to, after determining that the model failure has occurred or after sending the model failure reporting information or after receiving the model recovery information, and before performing information transmission with the network device according to the model recovery information, perform information transmission with the network device by using one of the following manners:
performing information transmission with the network device by using a non-AI/ML manner; or
when the first AI model is used for Channel State Information (CSI) reporting or beam reporting, perform CSI reporting or beam reporting by using a first CSI reporting configuration, where the first CSI reporting configuration is indicated by the model recovery information, or the first CSI reporting configuration is a pre-agreed CSI reporting configuration between the terminal device and the network device; or
perform information transmission with the network device by using a third AI model, where the third AI model is indicated by the model recovery information, or the third AI model is a pre-agreed AI model between the terminal device and the network device; or
not performing information transmission with the network device.

In some implementations, the sending unit 1002 is configured to perform CSI reporting by using a first codebook type when the first AI model is used for CSI reporting, where the first codebook type is indicated by the model recovery information, or the first codebook type is a pre-agreed codebook type between the terminal device and the network device; or perform beam reporting by using a non-AI/ML beam reporting manner when the first AI model is used for beam reporting.

It will be understood by those skilled in the art that the above description of the model failure recovery apparatus of the embodiment of the present disclosure may be understood with reference to the description of the model failure recovery method of the embodiment of the present disclosure.

FIG. 11 is a second schematic diagram of a structural composition of a model failure recovery apparatus provided by the embodiment of the present disclosure, and the measurement apparatus is applied to a network device. As illustrated in FIG. 11, the apparatus includes a receiving unit 1101 and a sending unit 1102.

The receiving unit 1101 is configured to receive model failure reporting information sent by a terminal device. The model failure reporting information is used to indicate that a model failure has occurred in a first Artificial Intelligence (AI) model or to indicate whether a model failure has occurred in the first AI model.

The sending unit 1102 is configured to send model recovery information to the terminal device. The model recovery information is used by the terminal device for performing information transmission with the network device.

In some implementations, the sending unit 1102 is configured to send a first signaling to the terminal device. The first signaling is used to configure a period for performance monitoring and/or a period for the terminal device to send the model failure reporting information; or the first signaling is used to activate the terminal device to perform performance monitoring and/or activate the terminal device to send the model failure reporting information.

In some implementations, the first signaling is further used to indicate a monitoring result type used for performance monitoring and/or a threshold for model failure, and the threshold is used by the terminal device to determine, based on the monitoring result, whether the model failure has occurred in the first AI model.

In some implementations, sending of the model failure reporting information is triggered by an event, or triggered by a triggering signaling sent by the network device, or periodically performed through an uplink control channel.

In some implementations, the event comprises that: it is monitored by the terminal device that the model failure has occurred in the first AI model.

In some implementations, the model failure reporting information comprises first indication information, the first indication information is used to indicate one or more second AI models, or used to indicate whether the terminal device confirms a second AI model; the second AI model is a model recommended by the terminal device after performing performance monitoring on candidate AI models, or the second AI model is an AI model obtained by the terminal device after performing online training on the first AI model.

In some implementations, the candidate AI models are configured by the network device for the terminal device, or the candidate AI models are obtained by the terminal device through pre-training a basic AI model.

In some implementations, the first indication information is further used to indicate a monitoring result corresponding to each second AI model.

In some implementations, when there is no AI model, whose monitoring result meets a preset condition, among the candidate AI models, the first indication information is used to indicate information about no recommended model.

In some implementations, the model recovery information is used to indicate whether the terminal device uses a second AI model, which is reported by the terminal device through the model failure reporting information, to replace the first AI model for information transmission with the network device; or the model recovery information is used to indicate an AI model from multiple second AI models reported by the terminal device through the model failure reporting information, to replace the first AI model for information transmission with the network device; or the model recovery information is used to indicate whether the terminal device uses a second AI model confirmed by the terminal device to replace the first AI model, for information transmission with the network device; or the model recovery information is used to indicate an AI model from candidate AI models to update the first AI model for information transmission with the network device; or the model recovery information is used to indicate that the terminal device performs information transmission with the network device through a non-AI/ML manner.

In some implementations, the receiving unit 1101 is configured to receive a model application time reported by the terminal device, or the receiving unit 1101 is configured to configure the model application time for the terminal device. The model application time is used by the terminal device to determine a starting time for applying a target AI model indicated by the model recovery information.

In some implementations, the receiving unit 1101 is configured to receive information sent by the terminal device using a target AI model indicated by the model recovery information.

The apparatus further includes a processing unit 1103, which is configured to process the information using a network-side model corresponding to the target AI model.

In some implementations, the receiving unit 1101 is configured to, after receiving the model failure reporting information or after sending the model recovery information, and before receiving information transmitted by the terminal device according to the model recovery information, receive information sent by the terminal device by using one of the following manners:
receiving, by the network device, information sent by the terminal device by using a non-AI/ML manner; or
when the first AI model is used for Channel State Information (CSI) reporting or beam reporting, receiving CSI reporting or beam reporting sent by the terminal device by using a first CSI reporting configuration, where the first CSI reporting configuration is indicated by the model recovery information, or the first CSI reporting configuration is a pre-agreed CSI reporting configuration between the terminal device and the network device; or
receiving information sent by the terminal device by using a third AI model, where the third AI model is indicated by the model recovery information, or the third AI model is a pre-agreed AI model between the terminal device and the network device.

In some implementations, the receiving unit 1101 is configured to receive CSI reporting sent by the terminal device by using a first codebook type when the first AI model is used for CSI reporting, where the first codebook type is indicated by the model recovery information, or the first codebook type is a pre-agreed codebook type between the terminal device and the network device; or receive beam reporting sent by the terminal device by using a non-AI/ML beam reporting manner when the first AI model is used for beam reporting.

It will be understood by those skilled in the art that the above description of the model failure recovery apparatus of the embodiment of the present disclosure may be understood with reference to the description of the model failure recovery method of the embodiment of the present disclosure.

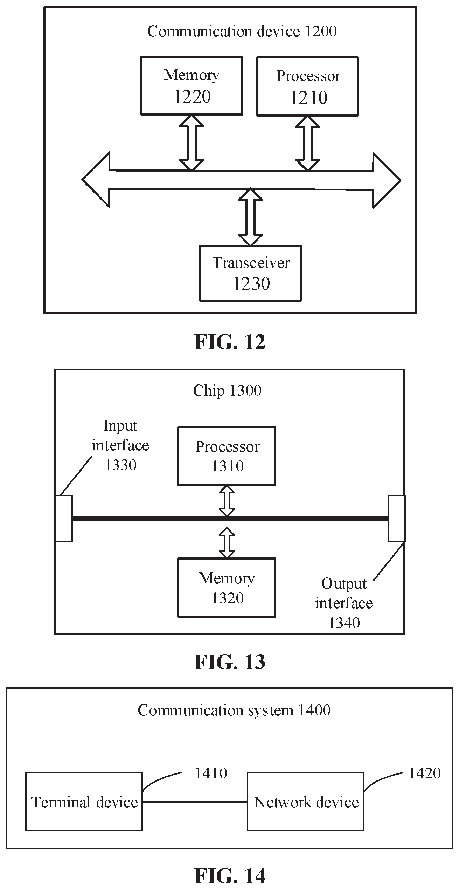

FIG. 12 is a schematic structural diagram of a communication device 1200 provided by an embodiment of the present disclosure. The communication device may be a terminal device or a network device. The communication device 1200 illustrated in FIG. 12 includes a processor 1210 that may call and execute a computer program from a memory to implement the method in the embodiments of the present disclosure.

In some implementations, as illustrated in FIG. 12, the communication device 1200 may also include a memory 1220. The processor 1210 may call and execute a computer program from the memory 1220 to implement the method in the embodiments of the present disclosure.

The memory 1220 may be a separate device independent of the processor 1210 or may be integrated in the processor 1210.

In some implementations, as illustrated in FIG. 12, the communication device 1200 may also include a transceiver 1230. The processor 1210 may control the transceiver 1230 to communicate with other devices, and in particular send information or data to other devices, or receive information or data sent by other devices.

The transceiver 1230 may include a transmitter and a receiver. The transceiver 1230 may further include antennas. The number of antennas may be one or more.

In some implementations, the communication device 1200 may be specifically a network device of the embodiments of the present disclosure, and the communication device 1200 may implement corresponding processes implemented by the network device in various methods of the embodiments of the present disclosure, which will not be repeated here for the sake of brevity.

In some implementations, the communication device 1200 may be specifically a mobile terminal/terminal device of the embodiments of the present disclosure, and the communication device 1200 may implement corresponding processes implemented by the mobile terminal/the terminal device in various methods of the embodiments of the present disclosure, which will not be repeated here for the sake of brevity.

FIG. 13 is a schematic structural diagram of a chip according to an embodiment of the present disclosure. As illustrated in FIG. 13, the chip 1300 includes a processor 1310, which may call and execute a computer program from a memory to implement the method in the embodiments of the present disclosure.

In some implementations, as illustrated in FIG. 13, the chip 1300 may also include a memory 1320. The processor 1310 may call and execute a computer program from the memory 1320 to implement the method in the embodiments of the present disclosure.

The memory 1320 may be a separate device independent of the processor 1310 or may be integrated in the processor 1310.

In some implementations, the chip 1300 may also include an input interface 1330. The processor 1310 may control the input interface 1330 to communicate with other devices or chips, and in particular to obtain information or data sent by other devices or chips.

In some implementations, the chip 1300 may also include an output interface 1340. The processor 1310 may control the output interface 1340 to communicate with other devices or chips, and in particular to output information or data to other devices or chips.

In some implementations, the chip may be applied to be the network device of the embodiments of the present disclosure, and the chip may implement corresponding processes implemented by the network device in various methods of the embodiments of the present disclosure, which will not be repeated here for the sake of brevity.

In some implementations, the chip may be applied to be a mobile terminal/terminal device of an embodiment of the present disclosure, and the chip may implement corresponding processes implemented by the mobile terminal/the terminal device in the respective methods of the embodiments of the present disclosure, which will not be repeated here for the sake of brevity.

It is to be understood that the chip mentioned in the embodiments of the present disclosure may also be referred to as a system-level chip, a system chip, a chip system or a system-on-chip or the like.

FIG. 12 is a schematic block diagram of a communication system 1200 provided by an embodiment of the present disclosure. As illustrated in FIG. 12, the communication system 1200 includes a terminal device 1210 and a network device 1220.

The terminal device 1210 may be configured to implement corresponding functions implemented by the terminal device in the above method, and the network device 1220 may be configured to implement corresponding functions implemented by the network device in the above method, which will not be repeated here for the sake of brevity.

It is to be understood that the processor of the present disclosure may be an integrated circuit chip having a signal processing capability. In implementation, the actions of the above method embodiments may be accomplished by integrated logic circuitry of hardware in processor or instructions in the form of software. The above processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, actions and logic diagrams disclosed in the embodiments of the present disclosure. The general purpose processor may be a microprocessor or any conventional processor. The actions of the method disclosed in the embodiments of the present disclosure may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It is to be noted that the memory in the systems and methods described herein is intended to include, but is not limited to, these memories and any other suitable types of memory.

It is to be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium for storing a computer program.

Optionally, the computer-readable storage medium may be applied to the network device of the embodiments of the present disclosure, and the computer program causes a computer to implement corresponding processes implemented by the network device in the methods of the embodiments of the present disclosure, which will not be repeated here for the sake of brevity.

In some implementations, the computer-readable storage medium may be applied to the mobile terminal/terminal device of the embodiments of the present disclosure, and the computer program causes a computer to implement corresponding processes implemented by the mobile terminal/terminal device in the methods of the embodiments of the present disclosure, which will not be repeated here for the sake of brevity.

In an embodiment of the present disclosure, there is further provided a computer program product, which includes computer program instructions.

Optionally, the computer program product may be applied to the network device of the embodiments of the present disclosure, and the computer program instructions cause a computer to implement corresponding processes implemented by the network device in the methods of the embodiments of the present disclosure, which will not be repeated here for the sake of brevity.

In some implementations, the computer program product may be applied to the mobile terminal/terminal device of the embodiments of the present disclosure, and the computer program instructions cause a computer to implement corresponding processes implemented by the mobile terminal/terminal device in the methods of the embodiments of the present disclosure, which will not be repeated here for the sake of brevity.

In an embodiment of the present disclosure, there is further provided a computer program.

Optionally, the computer program may be applied to the network device of the embodiments of the present disclosure, and the computer program, when running on a computer, causes the computer to implement corresponding processes implemented by the network device in the methods of the embodiments of the present disclosure, which will not be repeated here for the sake of brevity.

In some implementations, the computer program may be applied to the mobile terminal/terminal device of the embodiments of the present disclosure, and the computer program, when running on a computer, causes the computer to implement corresponding processes implemented by the mobile terminal/terminal device in the methods of the embodiments of the present disclosure, which will not be repeated here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it is to be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over multiple network units. Part or all of the units may be selected according to the actual needs to achieve the purpose of the embodiments of the present disclosure.

In addition, various functional units in various embodiments of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions can be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The above is only the specific implementation of the present disclosure, but the scope of protection of the present disclosure is not limited thereto. Any person skilled in the art may easily think of changes or substitutions within the technical scope disclosed in the present disclosure, which is to be covered within the protection scope of the present disclosure. Therefore, the scope of protection of the present disclosure shall be subject to the scope of protection of the claims.

## Claims

1. A method for model failure recovery, comprising:
performing, by a terminal device, performance monitoring on a first Artificial Intelligence (AI) model, and sending model failure reporting information to a network device according to a monitoring result, wherein the model failure reporting information is used to indicate that a model failure has occurred in the first AI model or to indicate whether a model failure has occurred in the first AI model; and
receiving, by the terminal device, model recovery information sent by the network device, and performing, by the terminal device, information transmission with the network device according to the model recovery information.

2. The method of claim 1, further comprising:
receiving, by the terminal device, a first signaling sent by the network device,
wherein the first signaling is used to configure a period for performance monitoring and/or a period for the terminal device to send the model failure reporting information; or
the first signaling is used to activate the terminal device to perform performance monitoring and/or activate the terminal device to send the model failure reporting information.

3. The method of claim 2, wherein the first signaling is further used to indicate a type of monitoring result used for performance monitoring and/or a threshold for model failure, and the threshold is used by the terminal device to determine, based on the monitoring result, whether the model failure has occurred in the first AI model.

4. The method of any one of claims 1 to 3, wherein performing, by the terminal device, performance monitoring on the first AI model comprises:
performing, by the terminal device, performance monitoring on the first AI model by comparing an output of the first AI model with a reference label, wherein the reference label is a ground truth label corresponding to the output of the first AI model, or the reference label is an output obtained based on a non-AI/Machine Learning (ML) manner.

5. The method of any one of claims 1 to 4, further comprising:
in a plurality of performance monitoring on the first AI model, when each of monitoring results falls below a threshold or is different from a preset value, or a statistical value of the monitoring results falls below the threshold, determining, by the terminal device, that the model failure has occurred in the first AI model.

6. The method of any one of claims 1 to 4, further comprising:
in each performance monitoring on the first AI model, when a monitoring result falls below a threshold or is different from a preset value, reporting, by the terminal device, a model failure sample to a higher layer; and when the higher layer counts that a number of model failure samples has reached a specified maximum value, determining, by the terminal device, that the model failure has occurred.

7. The method of any one of claims 1 to 6, wherein sending the model failure reporting information to the network device according to the monitoring result comprises:
when the monitoring result indicates that the model failure has occurred in the first AI model, sending, by the terminal device, the model failure reporting information to the network device, wherein the model failure reporting information is used to indicate that the model failure has occurred in the first AI model; or
sending, by the terminal device, the model failure reporting information to the network device, wherein the model failure reporting information is used to indicate whether the model failure has occurred in the first AI model.

8. The method of any one of claims 1 to 7, wherein sending of the model failure reporting information is triggered by an event, or triggered by a triggering signaling sent by the network device, or periodically performed through an uplink control channel.

9. The method of any one of claims 1 to 8, wherein the model failure reporting information comprises first indication information, the first indication information is used to indicate one or more second AI models, or used to indicate whether the terminal device confirms a second AI model,
wherein the second AI model is an AI model recommended by the terminal device after performing performance monitoring on candidate AI models, or the second AI model is an AI model obtained by the terminal device after performing online training on the first AI model.

10. The method of claim 9, wherein the candidate AI models are configured by the network device for the terminal device, or the candidate AI models are obtained by the terminal device through pre-training a basic AI model.

11. The method of claim 9 or 10, wherein the first indication information is further used to indicate a monitoring result corresponding to each second AI model.

12. The method of any one of claims 9 to 11, wherein when there is no AI model, whose monitoring result meets a preset condition, among the candidate AI models, the first indication information is used to indicate information about no recommended model.

13. The method of any one of claims 1 to 12, wherein
the model recovery information is used to indicate whether the terminal device uses a second AI model, which is reported by the terminal device through the model failure reporting information, to replace the first AI model for information transmission with the network device; or
the model recovery information is used to indicate an AI model from a plurality of second AI models reported by the terminal device through the model failure reporting information, to replace the first AI model for information transmission with the network device; or
the model recovery information is used to indicate whether the terminal device uses a second AI model confirmed by the terminal device to replace the first AI model, for information transmission with the network device; or
the model recovery information is used to indicate an AI model from candidate AI models to update the first AI model for information transmission with the network device; or
the model recovery information is used to indicate that the terminal device performs information transmission with the network device through a non-AI/ML manner.

14. The method of any one of claims 1 to 13, wherein performing, by the terminal device, information transmission with the network device according to the model recovery information comprises:
replacing, by the terminal device, the first AI model with a target AI model indicated by the model recovery information, and performing, by the terminal device, information transmission with the network device by using the target AI model; or
updating, by the terminal device, a model structure of the first AI model with a target model structure indicated by the model recovery information, and/or updating, by the terminal device, a model parameter of the first AI model with a target model parameter indicated by the model recovery information to obtain the target AI model, and performing, by the terminal device, information transmission with the network device by using the target AI model; or
performing, by the terminal device, information transmission with the network device through a non-AI/ML manner indicated by the model recovery information.

15. The method of any one of claims 1 to 14, wherein performing, by the terminal device, information transmission with the network device according to the model recovery information comprises:
determining, by the terminal device according to a model application time, a starting time for applying a target AI model indicated by the model recovery information, wherein the model application time is reported by the terminal device to the network device through User Equipment (UE) capabilities, or the model application time is configured by the network device for the terminal device; and
performing, by the terminal device, information transmission with the network device by using the target AI model after the starting time.

16. The method of any one of claims 1 to 15, further comprising:
after determining that the model failure has occurred or after sending the model failure reporting information or after receiving the model recovery information, and before performing information transmission with the network device according to the model recovery information, performing, by the terminal device, information transmission with the network device by using one of the following manners:
performing, by the terminal device, information transmission with the network device by using a non-AI/ML manner; or
when the first AI model is used for Channel State Information (CSI) reporting or beam reporting, performing, by the terminal device, CSI reporting or beam reporting by using a first CSI reporting configuration, wherein the first CSI reporting configuration is indicated by the model recovery information, or the first CSI reporting configuration is a pre-agreed CSI reporting configuration between the terminal device and the network device; or
performing, by the terminal device, information transmission with the network device by using a third AI model, wherein the third AI model is indicated by the model recovery information, or the third AI model is a pre-agreed AI model between the terminal device and the network device; or
not performing, by the terminal device, information transmission with the network device.

17. The method of claim 16, wherein performing, by the terminal device, information transmission with the network device by using the non-AI/ML manner comprises:
when the first AI model is used for CSI reporting, performing, by the terminal device, CSI reporting by using a first codebook type, wherein the first codebook type is indicated by the model recovery information, or the first codebook type is a pre-agreed codebook type between the terminal device and the network device; or
when the first AI model is used for beam reporting, performing, by the terminal device, beam reporting by using a non-AI/ML beam reporting manner.

18. A method for model failure recovery, comprising:
receiving, by a network device, model failure reporting information sent by a terminal device, wherein the model failure reporting information is used to indicate that a model failure has occurred in a first Artificial Intelligence (AI) model or to indicate whether a model failure has occurred in the first AI model; and
sending, by the network device, model recovery information to the terminal device, wherein the model recovery information is used by the terminal device for performing information transmission with the network device.

19. The method of claim 18, further comprising:
sending, by the network device, a first signaling to the terminal device,
wherein the first signaling is used to configure a period for performance monitoring and/or a period for the terminal device to send the model failure reporting information; or
the first signaling is used to activate the terminal device to perform performance monitoring and/or activate the terminal device to send the model failure reporting information.

20. The method of claim 19, wherein the first signaling is further used to indicate a type of monitoring result used for performance monitoring and/or a threshold for model failure, and the threshold is used by the terminal device to determine, based on the monitoring result, whether the model failure has occurred in the first AI model.

21. The method of any one of claims 18 to 20, wherein sending of the model failure reporting information is triggered by an event, or triggered by a triggering signaling sent by the network device, or periodically performed through an uplink control channel.

22. The method of claim 21, wherein the event comprises that: it is monitored by the terminal device that the model failure has occurred in the first AI model.

23. The method of any one of claims 18 to 22, wherein the model failure reporting information comprises first indication information, the first indication information is used to indicate one or more second AI models, or used to indicate whether the terminal device confirms a second AI model,
wherein the second AI model is an AI model recommended by the terminal device after performing performance monitoring on candidate AI models, or the second AI model is an AI model obtained by the terminal device after performing online training on the first AI model.

24. The method of claim 23, wherein the candidate AI models are configured by the network device for the terminal device, or the candidate AI models are obtained by the terminal device through pre-training a basic AI model.

25. The method of claim 23 or 24, wherein the first indication information is further used to indicate a monitoring result corresponding to each second AI model.

26. The method of any one of claims 23 to 25, wherein when there is no AI model, whose monitoring result meets a preset condition, among the candidate AI models, the first indication information is used to indicate information about no recommended model.

27. The method of any one of claims 18 to 26, wherein
the model recovery information is used to indicate whether the terminal device uses a second AI model, which is reported by the terminal device through the model failure reporting information, to replace the first AI model for information transmission with the network device; or
the model recovery information is used to indicate an AI model from a plurality of second AI models reported by the terminal device through the model failure reporting information, to replace the first AI model for information transmission with the network device; or
the model recovery information is used to indicate whether the terminal device uses a second AI model confirmed by the terminal device to replace the first AI model, for information transmission with the network device; or
the model recovery information is used to indicate an AI model from candidate AI models to update the first AI model for information transmission with the network device; or
the model recovery information is used to indicate that the terminal device performs information transmission with the network device through a non-AI/ML manner.

28. The method of any one of claims 18 to 27, further comprising:
receiving, by the network device, a model application time reported by the terminal device, or configuring, by the network device, the model application time for the terminal device, wherein the model application time is used by the terminal device to determine a starting time for applying a target AI model indicated by the model recovery information.

29. The method of any one of claims 18 to 28, further comprising:
receiving, by the network device, information sent by the terminal device using a target AI model indicated by the model recovery information; and
processing, by the network device, the information using a network-side model corresponding to the target AI model.

30. The method of any one of claims 18 to 29, further comprising:
after receiving the model failure reporting information or after sending the model recovery information, and before receiving information transmitted by the terminal device according to the model recovery information, receiving, by the network device, information sent by the terminal device by using one of the following manners:
receiving, by the network device, information sent by the terminal device by using a non-AI/ML manner; or
when the first AI model is used for Channel State Information (CSI) reporting or beam reporting, receiving, by the network device, CSI reporting or beam reporting sent by the terminal device by using a first CSI reporting configuration, wherein the first CSI reporting configuration is indicated by the model recovery information, or the first CSI reporting configuration is a pre-agreed CSI reporting configuration between the terminal device and the network device; or
receiving, by the network device, information sent by the terminal device by using a third AI model, wherein the third AI model is indicated by the model recovery information, or the third AI model is a pre-agreed AI model between the terminal device and the network device.

31. The method of claim 30, wherein receiving, by the network device, information sent by the terminal device by using the non-AI/ML manner comprises:
when the first AI model is used for CSI reporting, receiving, by the network device, CSI reporting sent by the terminal device by using a first codebook type, wherein the first codebook type is indicated by the model recovery information, or the first codebook type is a pre-agreed codebook type between the terminal device and the network device; or
when the first AI model is used for beam reporting, receiving, by the network device, beam reporting sent by the terminal device by using a non-AI/ML beam reporting manner.

32. An apparatus for model failure recovery, applied to a terminal device, comprising:
a monitoring unit, configured to perform monitor performance monitoring on a first Artificial Intelligence (AI) model;
a sending unit, configured to send model failure reporting information to a network device according to a monitoring result, wherein the model failure reporting information is used to indicate that a model failure has occurred in the first AI model or to indicate whether a model failure has occurred in the first AI model; and
a receiving unit, configured to receive model recovery information sent by the network device,
wherein the sending unit is further configured to perform information transmission with the network device according to the model recovery information.

33. An apparatus for model failure recovery, applied to a network device, comprising:
a receiving unit, configured to receive model failure reporting information sent by a terminal device, wherein the model failure reporting information is used to indicate that a model failure has occurred in a first Artificial Intelligence (AI) model or to indicate whether a model failure has occurred in the first AI model; and
a sending unit, configured to send model recovery information to the terminal device, wherein the model recovery information is used by the terminal device for performing information transmission with the network device.

34. A terminal device, comprising: a processor and a memory, wherein the memory is configured to store a computer program, and the processor is configured to call and run the computer program stored in the memory to cause the terminal device to implement the method of any of claims 1 to 17.

35. A network device, comprising: a processor and a memory, wherein the memory is configured to store a computer program, and the processor is configured to call and run the computer program stored in the memory to cause the terminal device to implement the method of any of claims 18 to 31.

36. A chip, comprising: a processor, configured to call and run a computer program from a memory, so that a device equipped with the chip to implement the method of any of claims 1 to 17 or the method of any one of claims 18 to 31.

37. A computer-readable storage medium, configured to store a computer program that causes a computer to implement the method of any of claims 1 to 17 or the method of any one of claims 18 to 31.

38. A computer program product, comprising computer program instructions, wherein the computer program instructions cause a computer to implement the method of any one of claims 1 to 17 or the method of any one of claims 18 to 31.

39. A computer program, wherein the computer program causes a computer to implement the method of any of claims 1 to 17 or the method of any one of claims 18 to 31.
